(19) Europäisches Patentamt
European Patent Office
Office européen des brevets

(11) **EP 1 825 602 B1**

(12) **EUROPÄISCHE PATENTSCHRIFT**

(45) Veröffentlichungstag und Bekanntmachung des Hinweises auf die Patenterteilung:
**26.08.2009 Patentblatt 2009/35**

(51) Int Cl.:
**H04B 1/707** (2006.01)

(21) Anmeldenummer: 05818704.8

(22) Anmeldetag: **12.12.2005**

(86) Internationale Anmeldenummer:
**PCT/EP2005/013298**

(87) Internationale Veröffentlichungsnummer:
**WO 2006/063764 (22.06.2006 Gazette 2006/25)**

(54) **VORRICHTUNG UND VERFAHREN ZUM ERMITTELN EINES KORRELATIONSMAXIMUMS**

APPARATUS AND METHOD FOR DETERMINING A CORRELATION MAXIMUM

SYSTEME ET PROCEDE POUR DETERMINER UN MAXIMUM DE CORRELATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.12.2004 DE 102004059946**

(43) Veröffentlichungstag der Anmeldung:
**29.08.2007 Patentblatt 2007/35**

(73) Patentinhaber: **Fraunhofer-Gesellschaft zur Förderung der angewandten Forschung e.V.
80686 München (DE)**

(72) Erfinder:
• **WAGNER, Carmen
91094 Langensendelbach (DE)**
• **STADALI, Holger
91058 Erlangen (DE)**

(74) Vertreter: **Reitzle, Helmut
Pfenning, Meinig & Partner GbR
Patent- und Rechtsanwälte
Theresienhöhe 13
80339 München (DE)**

(56) Entgegenhaltungen:
**EP-A- 0 654 913      US-A- 5 598 429
US-A- 5 818 868      US-B1- 6 748 007**

**Beschreibung**

Die vorliegende Erfindung bezieht sich auf Vorrichtungen und Verfahren zum Ermitteln von Korrelationsmaxima, die insbesondere für digitale Übertragungssysteme einsetzbar sind.

Damit sich ein Empfänger in einem digitalen Übertragungs-system auf ein, von einem Sender ausgesendetes digitales Signal aufsynchronisieren kann, strahlt der Sender ein digitales Signal aus, das dem Empfänger bekannt ist. Die Aufgabe des Empfängers liegt darin, den genauen Eintreffzeitpunkt TOA (TOA; TOA = time of arrival) des gesendeten Signals zu bestimmen. Um den Eintreffzeitpunkt zu bestimmen, wird die Kreuzkorrelierte zwischen dem digitalen Empfangssignal und dem bekannten digitalen Sendesignal berechnet. Anschließend wird das Betragsmaximum der Kreuzkorrelierten detektiert und der Eintreffzeitpunkt des Sendesignals aus der Position des Korrelationsbetragsmaximum bestimmt.

Soll ein Korrelationsbetragsmaximum in einem vorgegebenen Bereich von Korrelationsbetragswerten bzw. in einem vorgegebenen Bereich von Indizes I eines Korrelationssignals gesucht werden, so kann das Korrelationsbetragsmaximum bestimmt werden, indem das Maximum aller sich in dem vorgegebenen Bereich befindlichen Korrelationsbeträge bestimmt wird.

Soll hingegen über einem fortlaufenden Signal, das heißt einem Strom von Samples, ein Korrelationsbetragsmaximum gesucht werden, dann muss fortlaufend beurteilt werden, ob der gerade berechnete Korrelationsbetrag ein gültiges, lokales Maximum darstellt oder nicht. Zur Bestimmung eines solchen lokalen Maximums kann ein festgelegter Schwellwert genützt werden, zusammen mit der Regel, dass ein Korrelationsbetragsmaximum dann vorliegt, wenn ein zu beurteilender Korrelationsbetrag den Schwellwert überschreitet. Ein solches Verfahren ist jedoch unflexibel und ungenau, da es keine Möglichkeit einer Anpassung an einen sich ändernden Übertragungskanal bietet. Dadurch kann es zu einer fehlerhaften Bestimmung des Korrelationsbetragsmaximums kommen. Als Folge einer fehlerhaften Bestimmung des Korrelationsbetragsmaximums ist eine Aufsynchronisation zwischen Sender und Empfänger eines Obertragungssystems nicht möglich oder es kann zu einer fehlerhaften Datenübertragung kommen.

US 5,818,868 A befasst sich mit einer Erkennung eines Empfangenen Datensignals. Dazu wird aus einer Gruppe empfangener Werte ein Mittelwert erzeugt und basierend auf diesem Mittelwert ein Schwellwert erzeugt. Sodann wird aus der Gruppe von Werten der größte Wert herausgenommen und mit dem Schwellwert verglichen. Der beschriebene Ansatz eignet sich nicht zur Ermittelung eines Maximums aus einem fortlaufenden Signal.

EP 0 654 913 A beschreibt ein System mit dem sich feststellen lässt, welcher Code und welche Phase einem empfangenden Codesignal zugrunde liegen.

US 5,585,429 A beschreibt ein System zum Erzeugen eines Synchronisationspulses aus Ausgangsdaten eines Korrelators. Dazu wird eine, über ein FIFO definierte Anzahl von Ausgangsdaten aufaddiert, um einen Schwellwert zu erhalten. Die Ausgangdaten des Korrelators werden mit diesem Schwellwert verglichen. Ist ein Wert der Ausgangsdaten größer als der Schwellwert, so wird der Synchronisationspuls erzeugt.

US 6,748,007 B1 beschreibt ein Verfahren zur Ermittlung eines Schwellwertes der zur Verarbeitung eines Signals verwendet werden kann. Zur Ermittlung des Schwellwertes werden Signalwerte betrachtet, die sich innerhalb einer vordefinierten Zeitspanne befinden. Aus diesen Werten wird der maximale Wert ermittelt sowie ein mittlerer Rauschwert. Aus dem maximalen Wert sowie des mittleren Rauschwerts wird der Schwellwert ermittelt.

Es ist die Aufgabe der vorliegenden Erfindung eine Vorrichtung zum Ermitteln eines Schwellwerts zur Bestimmung ob ein Korrelationsbetragswert ein Korrelationsmaximalwert ist, eine Vorrichtung zur Detektion eines Korrelatiorismaximalwerts sowie ein Verfahren und ein Computerprogramm zum Ermitteln eines Schwellwerts zur Bestimmung ob ein Korrelationsbetragswert ein Korrelationsmaximalwert ist sowie zur Detektion eines Korrelationsmaximalwerts zu schaffen, die eine sichere Bestimmung eines Korrelationsmaximalwerts aus einer Folge von Korrelationsbetragswerten ermöglichen.

Diese Aufgabe wird durch eine Vorrichtung zum Ermitteln eines Schwellwerts gemäß Anspruch 1, eine Vorrichtung zur Detektion eines Korrelationsmaximalwerts gemäß Anspruch 11, ein Verfahren zum Ermitteln eines Schwellwerts gemäß Anspruch 18, ein Verfahren zur Detektion eines Korrelationsmaximalwerts gemäß Anspruch 19, ein Computerprogramm zum Ermitteln eines Schwellwerts oder zur Detektion eines Korrelationsmaximalwerts gemäß Anspruch 20 gelöst.

Die vorliegende Erfindung schafft eine Vorrichtung zum Ermitteln eines Schwellwerts zur Bestimmung, ob ein zu beurteilendender Korrelationsbetragswert aus einer Folge von Korrelationsbetragswerten ein Korrelationsmaximalwert ist, mit folgenden Merkmalen:

einer Einrichtung zum Bestimmen eines Referenzwerts aus Korrelationsbetragswerten innerhalb eines Intervalls der Folge von Korrelationsbetragswerten, wobei der zu beurteilende Wert außerhalb des Intervalls liegt; und

einer Einrichtung zum Bestimmen des Schwellwerts in Abhängigkeit von dem Referenzwert.

Die vorliegende Erfindung schafft ferner eine Vorrichtung zur Detektion eines Korrelationsmaximalwerts aus einer Folge von Korrelationsbetragswerten mit folgenden Merkmalen:

einer Vorrichtung zum Ermitteln eines Schwellwerts; und

einer Einrichtung zum Vergleichen eines zu beurteilenden Korrelationsbetragswerts mit dem, für den zu beurteilenden Korrelationsbetragswert ermittelten Schwellwert, die ausgebildet ist, um abhängig von den Vergleichsergebnissen ein Triggersignal bereitzustellen, wobei das Triggersignal anzeigt, ob ein zu beurteilender Korrelationsbetragswert ein Korrelationsmaximalwert ist.

Der vorliegenden Erfindung liegt die Erkenntnis zugrunde, dass ein lokales Maximum, das deutlich aus einem Korrelationsfloor, dem verrauschten Mittelwert der Korrelationsbeträge herausragt, sicher bestimmt werden kann, indem der Korrelationsfloor fortlaufend durch eine Mittelwertbildung unter Aussparung des aktuell zu beurteilenden Korrelationsbetragswerts berechnet und eine Maximumentscheidung basierend auf dem aktuell berechneten Korrelationsfloor durchgeführt wird.

Der erfindungsgemäße Ansatz ermöglicht ein sicheres Erkennen eines Korrelationsbetragmaximalwertes in einer Folge von Korrelationsbetragswerten. Insbesondere können auch Korrelationsbetragmaximalwerte in einer unbegrenzt fortlaufenden Folge von Korrelationsbetragswerten sicher detektiert werden. Dies ist vorteilhaft um in einem Übertragungssystem den Eintreffzeitpunkt TOA einer zur Aufsynchronisation verwendeten Sendefolge in einem Empfänger sicher zu bestimmen. Ein wesentlicher Vorteil des erfindungsgemäßen Ansatzes ist die fortlaufende Ermittlung und Berücksichtigung äußerer Störeffekte bei der Berechnung des Schwellwertes zur Bestimmung des Korrelationsbetragmaximalwertes. Dadurch wird der Schwellwert flexibel an sich verändernde Kanaleigenschaften angepasst.

Gemäß einem Ausführungsbeispiel wird der ermittelte Korrelationsfloor mit einem vorgegebenen Faktor gewichtet. Eine günstige Wahl dieses Schwellwert-Faktors ist dabei vom betrachteten Übertragungs-System abhängig. Der Einsatz eines Schwellwert-Faktors hat den Vorteil, dass ein aus dem Korrelationsfloor deutlich herausragendes Maximum als ein tatsächliches Korrelationsbetragsmaximum angesehen wird und zur Bestimmung der Time Of Arrival oder des Eintreffzeitpunktes verwendet werden kann.

Gemäß einem weiteren Ausführungsbeispiel wird der Korrelationsfloor fortlaufend berechnet, indem ein zweigeteiltes Mittelungsfenster um die Lage des zu beurteilenden Korrelationsbetragswerts gelegt wird, und eine Mittelwertbildung über die sich innerhalb des zweigeteilten Mittelungsfenster befindlichen Korrelationsbetragswerte durchgeführt wird. Eine Zweiteilung der Mittelung, das heißt das Mitteln des Korrelationsfloors sowohl vor als auch nach der möglichen Korrelationsspitze ist vorteilhaft, um eine Fehldetektion bei einem plötzlichen Ansteigen des Korrelationsfloors zu vermeiden. Ein solcher Anstieg innerhalb sehr weniger bis zu einem einzigen Sample kann z. B. vorkommen, wenn zuerst nur Empfängerrauschen im Empfangssignal auftritt, dann aber ein sehr starker Interferer zu senden beginnt. Die Korrelationsbeträge würden dann stufenartig ansteigen, ohne dass eine Korrelationsspitze vorliegt. Tatsächlich sollen aber auch die vom Intervierer verursachten höheren Korrelationsbeträge als ein erhöhter Korrelationsfloor angesehen werden, innerhalb dessen eine Spitze des gesuchten Signals zu suchen ist. Damit ein stufenartiger Anstieg des Korrelationsfloors nicht fälschlicherweise als Spitze detektiert wird, die um ein Vielfaches aus dem vorherigen Korrelationsfloor herausragt ist es vorteilhaft, sowohl vor als auch nach der möglichen Lage einer Korrelationsspitze ein Mittelungsfenster zu legen.

Gemäß einem weiteren Ausführungsbeispiel wird nach der Detektion eines Korrelationsbetragsmaximums eine vorbestimmte Latenzzeit eingehalten, während der kein weiteres Korrelationsbetragsmaximum detektiert werden kann. Eine solche Latenzzeit hat den Vorteil, dass bei einem Mehrwegekanal Korrelationsmaximas von nachfolgenden Pfaden nicht detektiert werden. Die Latenzzeit hängt dabei von einem erwarteten Abstand zweier aufeinanderfolgender Korrelationsmaxima ab, der sich wiederum aus einer Anordnung der für eine Aufsynchronisation verwendeten Sendesignalfolgen innerhalb des ausgesendeten Signals ergibt.

Gemäß einem weiteren Ausführungsbeispiel wird ein Wendepunkt der Korrelationsbetragskurve ermittelt. Insbesondere wird ein Wendepunkt unmittelbar vor einem detektierten Hauptmaximum bestimmt. Eine Ermittlung des Wendepunkts hat den Vorteil, dass der Eintreffzeitpunkt erheblich genauer bestimmt werden kann, da der Wendepunkt bei geeigneten Sendesignalen deutlich weniger empfindlich gegenüber MehrwegeAusbreitung ist als das Korrelationsbetragsmaximum. Dies bedeutet, dass nachfolgende Pfade die Position des Wendepunkts weniger beeinflussen als die Position des Maximums. Ferner ist der Wendepunkt robuster gegenüber dem Rauschen.

Bevorzugte Ausführungsbeispiele der vorliegenden Erfindung werden nachfolgend bezugnehmend auf die beiliegenden Zeichnungen näher erläutert. Es zeigen:

Fig. 1    eine Vorrichtung zur Detektion eines Korrelationsmaximalwerts mit einer Vorrichtung zum Ermitteln eines Schwellwertes gemäß einem Ausführungsbeispiel der vorliegenden Erfindung;

Fig. 2    eine graphische Darstellung eines Korrelationsbetragssignals;

Fig. 3          eine weitere graphische Darstellung des Korrelationsbetragssignals mit Sliding-Window-Mittelwert;

Fig. 4          eine graphische Darstellung eines Korrelationsbetragmaximums;

Fig. 5a         eine graphische Darstellung eines Korrelationsbetragssignals;

Fig. 5b         Eine grafische Darstellung eines Zusammenhangs zwischen der Detektion eines Korrelationspeaks abhängig vom Schwellwert;

Fig. 6          ein Blockschaltbild einer Vorrichtung zur Detektion eines Korrelationsmaximalwerts gemäß einem weiteren Ausführungsbeispiel der vorliegenden Erfindung;

Fig. 7          ein Blockschaltbild eines Empfängers mit einer Vorrichtung zur Detektion eines Korrelationsbetragsmaximums gemäß einem Ausführungsbeispiel der vorliegenden Erfindung; und

Fig. 8A bis 8I  Übersicht über die, in dem in Fig. 7 gezeigten Ausführungsbeispiel verwendeten Parameter.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

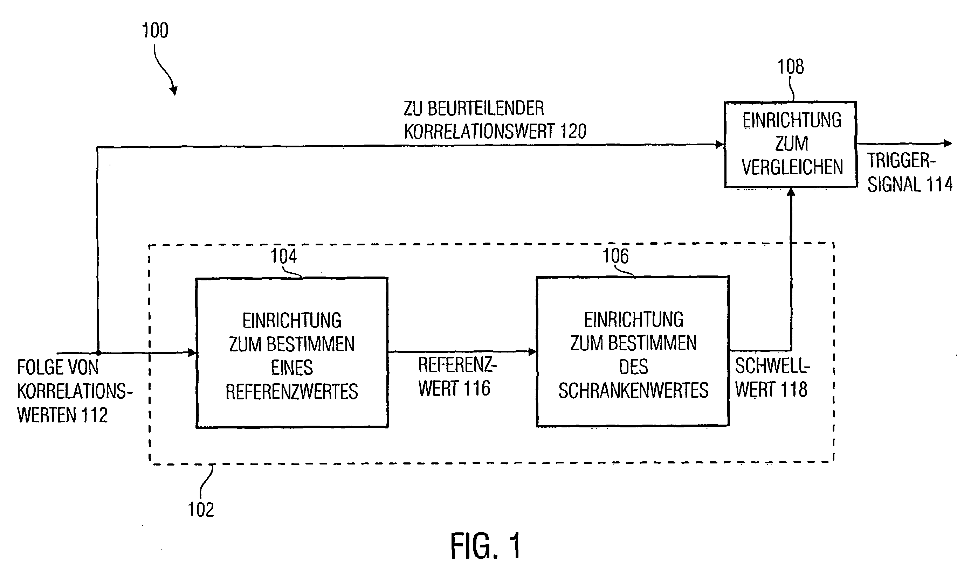

Fig. 1 zeigt ein Blockschaltbild einer Vorrichtung 100 zur Detektion eines Korrelationsmaximalwerts mit einer Vorrichtung 102 zum Ermitteln eines Schwellwerts gemäß einem Ausführungsbeispiel der vorliegenden Erfindung. Gemäß diesem Ausführungsbeispiel ist die Vorrichtung 100 zur Detektion eines Korrelationsmaximalwerts Teil eines Empfängers (nicht gezeigt in Fig. 1) eines Datenübertragungssystems. Zur Aufsynchronisation des Empfängers auf ein empfangenes Signal führt der Empfänger fortlaufend eine Kreuzkorrelation zwischen Werten des empfangenen Signals und bekannten im Empfänger gespeicherten Sendesignalwerten, die typischerweise periodisch im empfangenen Signal auftreten, durch. Die im Empfänger berechneten Korrelationsbeträge bilden ein fortlaufendes Korrelationsbetragswerte-Signal, das heißt, einen Strom von Korrelationsbetragswerte-Samples. Aus der Folge von Korrelationsbeträgen wird ein Korrelationsmaximalwert gesucht, um den Eintreffzeitpunkt des, aus den bekannten Sendesignalwerten bestehenden gesuchten Signals zu bestimmen. Als zu beurteilender Korrelationsbetragswert wird im folgenden ein aktuell anliegender oder aktuell zu bewertender Korrelationsbetragswert, aus der Folge von Korrelationsbetragswerten bezeichnet.

Die Vorrichtung 102 zum Ermitteln eines Schwellwerts zur Bestimmung, ob ein zu beurteilender Korrelationsbetragswert ein Korrelationsmaximalwert ist, weist eine Einrichtung 104 zum Bestimmen eines Referenzwerts und eine Einrichtung 116 zum Bestimmen eines Schwellwerts auf. Die Vorrichtung 100 zur Detektion eines Korrelationsmaximalwerts weist ferner eine Einrichtung 108 zum Vergleichen auf.

Die Vorrichtung 100 zur Detektion eines Korrelationsmaximalwerts ist ausgebildet, um eine Folge von Korrelationsbetragswerten 112 zu empfangen. Die Folge von Korrelationsbetragswerten 112 wird von der Einrichtung 104 zum Bestimmen eines Referenzwerts empfangen. Die Einrichtung 104 zum Bestimmen eines Referenzwerts ist ausgebildet, um aus einem Teilbereich der Folge von Korrelationsbetragswerten 112 einen Referenzwert 116 zu bilden und an die Einrichtung 106 zum Bestimmen des Schwellwerts 118 bereitzustellen.

Die Einrichtung 106 zum Bestimmen des Schwellwerts ist ausgebildet, um den Schwellwert 118 in Abhängigkeit von dem Referenzwert 116 zu bestimmen und an die Einrichtung 108 zum Vergleichen bereitzustellen.

Die Einrichtung 108 zum Vergleichen ist ausgebildet, um einen aktuell zu beurteilenden Korrelationsbetragswert 120 aus der Folge von Korrelationsbetragswerten 112 mit dem Schwellwert 118 zu vergleichen. Abhängig von einem Vergleichsergebnis ist die Einrichtung 108 zum Vergleichen ausgebildet, um ein Triggersignal 114 bereitzustellen. Das Triggersignal 114 zeigt an, ob der beurteilte Korrelationsbetragswert 120 ein Korrelationsmaximalwert oder Korrelationsmaximum ist bzw. kein Korrelationsmaximum ist. Dazu ist die Einrichtung 108 zum vergleichen ausgebildet, um den zu beurteilende Korrelationsbetragswert 120 mit dem Schwellwert oder Schrankenwert 108 zu vergleichen. Gemäß diesem Ausführungsbeispiel zeigt das Triggersignal 114 ein Maximum an, wenn der zu beurteilende Korrelationsbetragswert 120 oberhalb des Schwellwertes 118 liegt.

Gemäß diesem Ausführungsbeispiel ist die Einrichtung 104 zum Bestimmen eines Referenzwerts ausgebildet, um den Referenzwert 116 aus Korrelationsbetragswerten der Folge von Korrelationsbetragswerten 112 zu bilden, die innerhalb eines Teilbereichs oder Intervalls der Folge von Korrelationsbetragswerten 112 liegen, wobei der zu beurteilende Korrelationsbetragswert 120 außerhalb des Intervalls liegt. Die Einrichtung 104 zum Bestimmen des Referenzwerts 116 ist ausgebildet, um den Referenzwert 116 durch eine Kombination, beispielsweise einer Mittelwertbildung der Korrelationsbetragswerte innerhalb des Intervalls der Folge von Korrelationsbetragswerten 112 zu bilden. Gemäß diesem Ausführungsbeispiel wird in der Einrichtung 104 zum Bestimmen eines Referenzwerts ein arithmetischer Mittelwert aus den Korrelationsbetragswerten innerhalb des Intervalls gebildet. Der Referenzwert 116 entspricht damit dem Korrelationsfloor oder dem verrauschten Mittelwert der Korrelationsbeträge innerhalb des Intervalls, aus dem der Referenzwert 116 gebildet ist.

Gemäß einem weiteren Ausführungsbeispiel (nicht gezeigt in Fig. 1) wird in der Einrichtung zum Bestimmen eines Referenzwerts ein weiterer Referenzwert aus Korrelationsbetragswerten innerhalb eines weiteren Intervalls der Folge von Korrelationsbetragswerten gebildet, wobei der zu beurteilende Korrelationsbetragswert zwischen dem Intervall und dem weiteren Intervall liegt. Gemäß diesem Ausführungsbeispiel wird ein gemeinsamer Referenzwert in Abhängigkeit von dem Referenzwert und dem weiteren Referenzwert bestimmt. Dies kann beispielsweise durch eine arithmetische Mittelwertbildung aus dem Referenzwert und dem weiteren Referenzwert erfolgen. Dabei können zwischen dem Intervall und dem weiteren Intervall eine Mehrzahl von Korrelationsbetragswerten der Folge von Korrelationsbetragswerten liegen. Gemäß diesem Ausführungsbeispiel ist der zu beurteilende Korrelationsbetragswert in der Mitte zwischen dem Intervall und dem weiteren Intervall angeordnet und das Intervall und das weitere Intervall sind gleich groß.

Die Einrichtung 106 zum Bestimmen des Schwellwerts 108 ist ausgebildet, um den Schwellwert 118 in Abhängigkeit von dem Referenzwert 116 zu bestimmen. Damit ein zu beurteilender Korrelationsbetragswert 120 als ein tatsächliches Korrelationsbetragmaximum angesehen, und zur Bestimmung des Eintreffzeitpunktes der Sendefolge verwendet werden kann, muss der zu beurteilende Korrelationsbetragswert 120 das Kriterium erfüllen, dass seine Spitze um einen vorgegeben Faktor höher als der Korrelationsfloor liegt. Der Korrelationsfloor wird durch den Referenzwert 116 bestimmt. Der Schwellwert 118 wird deshalb gemäß diesem Ausführungsbeispiel durch Multiplikation des Referenzwerts 116 mit einem Schwellwert-Faktor multipliziert. Der Schwellwert-Faktor oder Gewichtungsfaktor ist vom betrachteten Übertragungs-System abhängig. Die Einrichtung 106 zum Bestimmen des Schwellwerts ist ausgebildet, um den Referenzwert 116 mit dem vorbestimmten Gewichtungsfaktor zu gewichten, und daraus den Schwellwert 118 zu ermitteln. Der Gewichtungsfaktor kann fest in der Einrichtung 106 zur Bestimmung des Schwellwerts gespeichert oder variabel einstellbar sein.

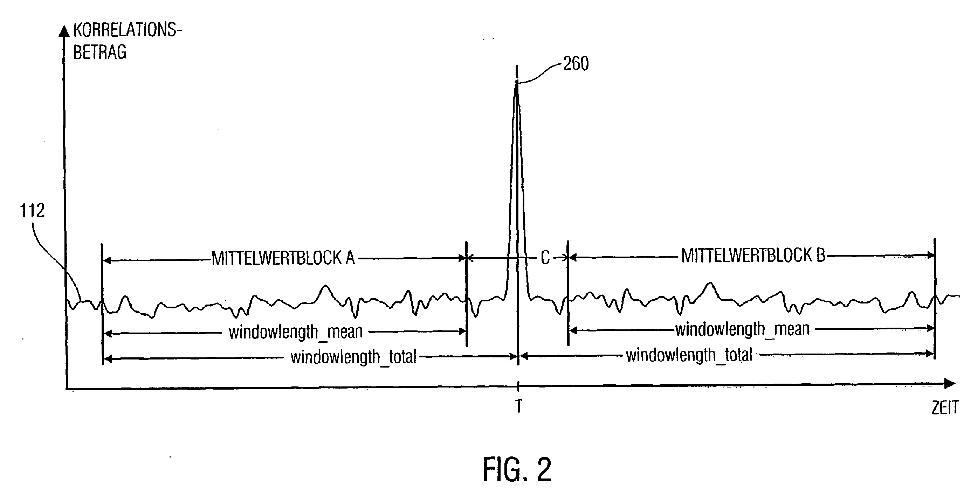

Fig. 2 zeigt den Verlauf einer fortlaufenden Berechnung der Korrelationsbeträge. Die Folge von Korrelationsbetragswerten 112 besteht aus zeitlich aufeinanderfolgenden Korrelationsbetragswerten, die auf einer horizontalen Zeitachse aufgetragen sind. In vertikaler Richtung ist der Absolutwert der Korrelationsbetragswerte aufgetragen. Die Folge von Korrelationsbetragswerten 112 weist sehr viele lokale Maxima auf, die jedoch vom Rauschen und anderen unverwünschten Efekten stammen. Nur ein lokales Maximum 260 ragt deutlich aus dem Korrelationsfloor, den verrauschten Mittelwert der Korrelationsbeträge heraus.

Um zu entscheiden ob zu einem Zeitpunkt T ein Korrelationsmaximalwert vorliegt, wird gemäß diesem Ausführungsbeispiel der Korrelationsfloor vor und nach dem Zeitpunkt T betrachtet. Alternativ kann auch nur der Korrelationsfloor vor dem Zeitpunkt T betrachtet werden. Dies ermöglicht eine schnellere Bestimmung, ob ein zu beurteilender Korrelationsbetragswert ein Korrelationsbetragsmaximalwert ist. Ein Verzicht auf die Betrachtung des Korrelationsfloors nach dem Zeitpunkt T ist insbesondere dann möglich, wenn plötzlich ansteigende Korrelationsfloorwerte bei einem Übertragungs-system ausgeschlossen werden können.

Gemäß Fig. 2 definiert der Zeitpunkt T den Eintreffzeitpunkt oder Beurteilungszeitpunk des zu beurteilenden Korrelationsbetragswerts 260, der in Fig. 2 ein Korrelationsbetragsmaximalwert ist. Gemäß diesem Ausführungsbeispiel wird zum einen der Korrelationsfloor über den Mittelwertblock A berechnet und zum anderen wird der Korrelationsfloor über den Mittelwertblock B berechnet. Die Mittelwertblöcke A, B bezeichnen zwei Teilintervalle der Folge von Korrelationsbetragswerten 112 über die jeweils ein Referenzwert berechnet wird. Die Intervallgröße der Mittelwertblöcke A, B ist gemäß diesem Ausführungsbeispiel gleich und hat eine Breite windowlength_mean. So befindet sich in den Mittelwertblöcken A, B jeweils eine gleiche Anzahl von Korrelationsbetragswerten oder Samples der Folge von Korrelationsbetragswerten 112.

Alternativ können die Mittelwertblöcke A, B eine unterschiedliche Größe aufweisen. Die Mittelwertblöcke A, B sind von dem Zeitpunkt T, der dem zu beurteilenden Korrelationsbetragswert der Folge von Korrelationsbetragswerten 112 entspricht beabstandet. Aus Fig. 2 ist ersichtlich, dass ein vorgegebener Bereich C um den Punkt T ausgespart wird, um falsche Entscheidungsfindungen zu vermeiden. Der nicht benützte Bereich C vor bzw. nach dem betrachteten Punkt T beträgt jeweils eine Anzahl von Korrelationsbetragswerten oder Samples deren Anzahl der Differenz windowlength_total - windowlength_mean entspricht. Der Parameter windowlength_total definiert die Anzahl von Samples zwischen dem Zeitpunkt T und dem am weitesten vom Punkt T entfernten Korrelationsbetragwertsample in den Mittelwertblöcken A, B.

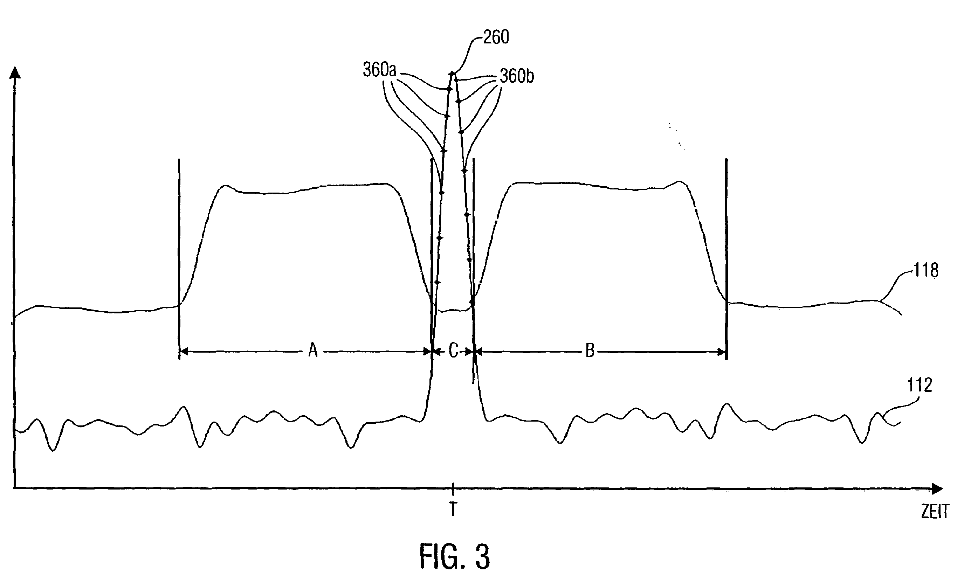

Fig. 3 zeigt eine weitere graphische Darstellung der Folge von Korrelationsbetragswerten 112 im Folgenden auch corr genannt sowie einen zeitlichen Verlauf der Schwellwerte 118, die den gewichteten Referenzwerten 116 bzw. dem gewichteten Korrelationsfloor entsprechen. Da sowohl die Referenzwerte 116 als auch der Schwellwert 118 fortlaufend für jeden zu beurteilenden Korrelationsbetragswert 120 berechnet werden, handelt es sich bei den Referenzwerten 116 und den Schwellwerten 118 um eine fortlaufende Folge aus einzelnen Samples, entsprechend der Folge aus Korrelationsbetragswerten 112. Der Korrelationsfloor wird im folgenden auch mit mean_corr und der Gewichtungsfaktor zum gewichten des Referenzwertes 116 mit peakmean_thresh bezeichnet.

Aus Fig. 3 ist ersichtlich, dass die Folge von Korrelationsbetragswerten 112 aus einer Vielzahl einzelner Korrelationsbetragswerte oder Samples 360a, 360b besteht. Zeitlich vor dem zu beurteilenden Korrelationsbetragswert 260 angeordnete Korrelationsbetragswerte sind mit dem Bezugzeichen 360a und zeitlich nachfolgende Korrelationsbetragswerte mit den Bezugzeichen 360b gekennzeichnet. Mit A, B sind entsprechend zu Fig. 2 die Mittelwertblöcke A, B um den zu beurteilenden Korrelationsbetragswert 260 zum Zeitpunkt T bezeichnet. Das Intervall C gibt wiederum den Abstand zwischen den Mittelwertblöcken A, B an, wobei der zu beurteilende Korrelationsbetragswert 260 in der Mitte des Intervalls C angeordnet ist.

Anhand von Fig. 3 wird ersichtlich, warum ein gewisser Bereich C um das betrachtete Sample 260 zum Zeitpunkt T bei der Berechnung des Korrelationsfloors nicht berücksichtigt wird. Die Aussparung C hat zur Folge, dass die Detektion des Korrelationsmaximalwerts 260 erleichtert wird, denn der Korrelationsfloor ist im Bereich C um einiges niedriger als in den Bereichen A, B, bei denen der Einfluss des Peaks eine deutliche Erhöhung des Korrelationsfloors zur Folge hat. Dieser Effekt beruht auf der Wahl der Sendefolge, die den Korrelationspeak zur Folge hat. Bevorzugter Weise werden für solche Korrelationsfolgen Folgen verwendet, die einen Korrelationspeak verursachen, in dessen direkter Umgebung der Korrelationsfloor minimal ist. Die Breite des Intervalls C wird daher in Abhängigkeit von den verwendeten Korrelationsfolgen bestimmt, die den zur Aufsynchronisierung genutzten Korrelationspeak hervorrufen.

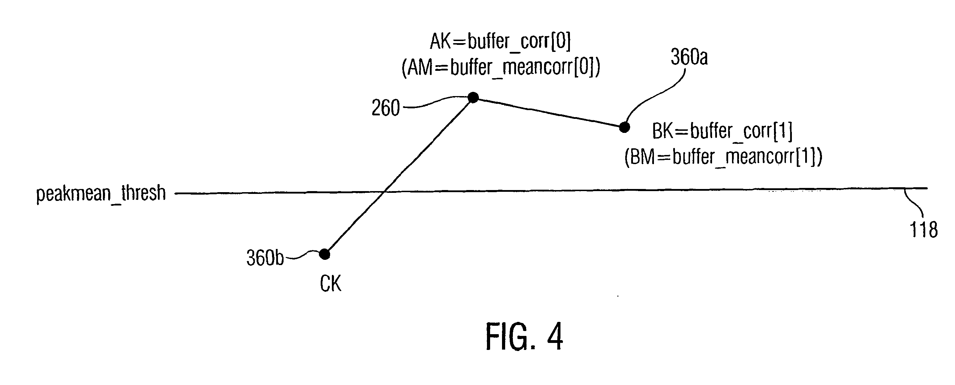

Fig. 4 veranschaulicht ein weiteres Kriterium, um in der fortlaufenden Signalverarbeitung ein Maximum zu detektieren. Bevor gemäß diesem Ausführungsbeispiel eine Entscheidung gefällt wird, ob ein neues Maximum vorliegt, für das ein Triggersignal nach außen gegeben wird, müssen zur Vermeidung einer Detektion eines falschen Peaks mehrere Bedingungen erfüllt sein. Dazu werden neben dem aktuell zu beurteilenden Korrelationsbetragswert 260 ein weiterer Korrelationsbetragswert 360a zusammen mit den für diese Werte 260, 360a ermittelten Korrelationsfloorwerten oder Schwellwerten in einem Speicher (nicht gezeigt in den Figuren) zwischengespeichert.

AK und BK seien im weiteren Korrelationsbetragswerte-Samples, die in einem Speicher (nicht gezeigt in den Figuren) buffer_corr stehen. AM und BM seien die dazugehörigen Werte des Korrelationsfloors in einem Speicher buffer_ meancorr (nicht gezeigt in den Figuren). Mit AK sei das älteste und mit BK das in dem aktuellen Schritt eingegangene Sample in der Folge von Korrelationsbetragswerten 112 bezeichnet, mit denen die Maximumentscheidung für AK getroffen werden soll. Aus Fig. 4 ist ersichtlich, dass die Korrelationsbetragswerte AK, BK beide oberhalb des Schwellwerts 118 liegen und somit potentielle Korrelationsmaximalwerte sind. Um zu entscheiden, ob einer der Korrelationsbetragswerte AK, BK ein Korrelationsmaximalwert ist, werden alle zwei Samples AK und BK im Speicher buffer_corr benötigt. Für ein Maximum muss das betrachtete Sample AK größer oder gleich dem zuletzt eingelesenen Sample BK sein.

Zur Bestimmung eines Eintreffzeitpunktes einer Signalsequenz bei einem Mehrwegekanal sollte immer nur das Eintreffen des ersten Signalpfads betrachtet werden. Deshalb interessiert in der Detektion das Korrelationsbetragsmaximums auch nur das erste Maximum, dass die oben angegebenen Kriterien erfüllt. Vorzugsweise wird deshalb nach der Detektion eines ersten Maximums der Detektor für eine gewisse Latenzzeit ausgeschaltet, damit die nachfolgenden Pfade nicht detektiert werden. Da der Sender üblicherweise die im Empfänger bekannte, und zur Korrelation verwendete Sequenz periodisch abstrahlt, um eine fortlaufende Positionsbestimmung bzw. TOA-Bestimmung zu ermöglichen, wird der Detektor nach Ablauf der Latenzzeit wieder eingeschaltet, um den Eintreffzeitpunkt für das Eintreffen des nächsten Sendesignals bestimmen zu können.

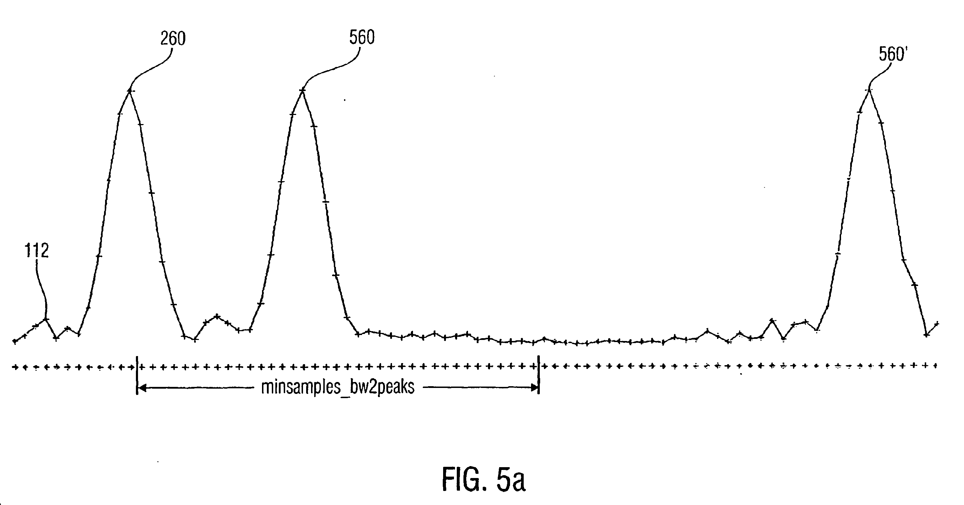

Fig. 5a zeigt einen Ausschnitt der Folge von Korrelationsbetragswerte 112 und insbesondere sind drei maximale Korrelationsbetragswerte 260, 560, 560' gezeigt, wobei die Korrelationsmaximas 260, 560' tatsächlichen Korrelationsmaximas entsprechen, das Korrelationsmaxima 560 jedoch von einer Mehrwegeausbreitung hervorgerufen wurde und somit kein gültiges Maximum für eine Aufsynchronisation ist. Bei der Mehrwegeausbreitung können neben der Maxmimumsdetektion des direkten Pfads mit einer gewissen Verzögerung eine oder sogar mehrere zusätzliche Peaks detektiert werden, für die das Triggersignal aber nicht gesetzt werden soll. In diesem Ausführungsbeispiel wird das Triggersignal gleich 1 gesetzt, wenn ein gültiger Korrelationsmaximalwert detektiert wurde. Um zu verhindern, dass das Triggersignal bei einem durch eine Mehrwegeausbreitung hervorgerufene Maximum erneut gesetzt wird, wird die Detektionseinrichtung für eine vorgegebene Latenzzeit deaktiviert. In diesem Ausführungsbeispiel ist die Latenzzeit mit minsamples_ bw2peaks angegeben. Der externe Parameter minsamples_bw2peaks wird benötigt, um anzugeben, wie viele Samples der Korrelationsfolge 112 mindestens zwischen zwei gültigen Peaks 260, 560' liegen müssen, damit das Triggersignal nach außen gegeben werden kann. Zu diesem Zweck wird der Zeitpunkt des letzten detektierten gültigen Maximalwerts gespeichert, und ein interner Parameter samples_lastpeak auf den Wert 0 gesetzt, wenn der letzte detektierte Peak bereits mindestens minsamples_bw2peaks samples zurückliegt. Für alle anderen Werte zwischen 1 und minsamples_ bw2peaks - 2 des Parameters samples_lastpeak wird kein neues Maximum detektiert, obwohl andere Bedingungen möglicherweise erfüllt wären. In Fig. 5a wird der Korrelationspeak 560 nicht als gültiges Kombinationsmaximum detektiert, da der Korrelationsbetragswert 560 innerhalb des Intervalls minsamples_bw2peaks nach dem als gültiges Maximum detektierten Korrelationsbetragswerts 260 liegt.

Gemäß einem weiteren Ausführungsbeispiel werden die Kombinationswertebeträge bzw. Signale aus denen die Korrelationsbetragswerte ermittelt werden, upgesampelt, um die Detektion des Korrelationsbetragsmaximums feiner als im Sample-Takt durchzuführen. Dies stellt nichts anderes dar, als eine spezielle Form der Interpolation zwischen den zugehörigen Korrelationsbetragswerten im Sample-Takt. Eine Steigerung der Genauigkeit bei der Eintreffzeitpunkt-Schätzung kann somit erreicht werden, indem die komplexen Korrelationsbetragswerte, beispielsweise nach dem Kombinieren von Teilkorrelationen upgesampelt werden. Dies erfolgt üblicherweise durch zero-insertion und Tiefpassfilterung. Anschließend wird der Betrag der upgesampelten komplexen Korrelationsbetragswerte berechnet und mit diesem weitergearbeitet. Aufgrund des Upsampling-Filters können Samples negativ werden. Für negative Werte kann aber kein Korrelationspeak vorliegen, weshalb Fälle für die Samples kleiner als Null sind, ausgeschlossen werden. Gültige Korrelationsbetragswerte müssen größer als Null sein.

Damit zum Zeitpunkt des Samples BK in Fig. 4 ein neues Korrelationsmaximalwert erkannt werden kann, müssen folgende Bedingungen erfüllt sein. Als erste Bedingung muss der letzte detektierte Peak mehr als minsamples_bw2peakssamples zurückliegen, das heißt,

```
samples_lastpeak > = minsamples_bw2peaks - 1
```

muss gelten und somit im Algorithmus samples_lastpeak = 0 sein. Dadurch werden Störeffekte aufgrund einer Mehrwegeausbreitung reduziert.

Als zweite Bedingung müssen der Korrelationsbetragswert AK und der Korrelationsfloor AM in Fig. 4 größer als Null sein.

Als dritte Bedingung muss der Korrelationsbetragswert AK in Fig. 4 größer sein als der Gewichtungsfaktor peakmean_thresh multipliziert mit dem Korrelationsfloorwert AM, das heißt,

```
AK > peakmean_thresh * AM
```

muss gelten. Dadurch wird gewährleistet, das der Korrelationsbetragswert AK oberhalb des Schwellwertes liegt.

Als vierte Bedingung muss AK größer oder gleich BK sein, das heißt, es muss gelten

$$AK \geq BK.$$

Die erste Bedingung hat bereits zur Folge, dass alle dem detektierten Maximum direkt nachfolgenden Punkte, für die die vierte Bedingung ebenfalls erfüllt wäre, bereits ausgeschlossen sind. Gäbe es die erste Bedingung nicht, würde man die drei Samples AK, BK und CK gemäß Fig. 4 für die Detektion eines Maximums benötigen. In diesem Fall läge bei AK ein Maximum vor, wenn in Fig. 4 das Sample CK kleiner als das Sample AK und dieses gleichzeitig größer oder gleich dem Sample BK wäre.

Sind alle vier Bedingungen erfüllt, wird das Triggersignal trigger = 1 gesetzt und das Verhältnis peak2mean des Wertes AK zu AM an eine zentrale Recheneinheit (nicht gezeigt in den Figuren) übergeben.

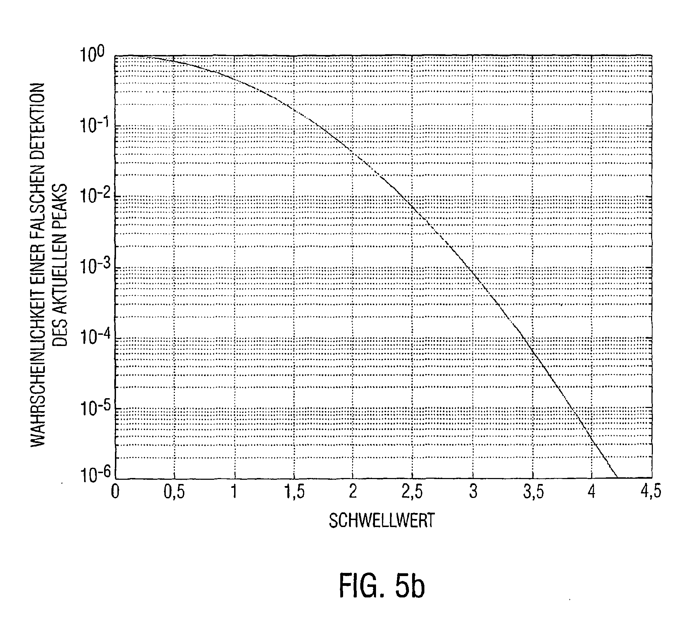

Fig. 5b zeigt eine grafische Darstellung, die die Wahrscheinlichkeit einer fehlerhaften Detektion eines Korrelationspeaks abhängig vom Schwellwert darstellt. Der Schwellwert ist auf der horizontalen Achse relativ zum Korrelationswert angegeben. Die in Fig. 5b gezeigte Fehlerwahrscheinlichkeit gilt für einen einzelnen zufällig herausgegriffenen Korrelationswert, der möglicherweise ein Kandidat für einen Korrelationspeak ist. Wenn also ein Korrelationspeak in einer Folge von Korrelationswerten detektiert werden soll, dann ist die Wahrscheinlichkeit einer Fehldetektion dementsprechend erhöht.

Außer der geschätzten time of arrival aufgrund eines detektierten Korrelationspeaks kann auch eine Qualität dieser Schätzung geliefert werden. Dafür wird gemäß einem Ausführungsbeispiel das Verhältnis aus Korrelationsspitze, das heißt, einem als Maximum erkannten Korrelationsbetragswerts und dem dazugehörigen Korrelationsfloor berechnet. Je größer dieser Wert ist, umso zuverlässiger wurde das Maximum detektiert. Alternativ kann das momentane Signal-zu-Rauschverhältnis SNR geschätzt werden. Gemäß einem Ausführungsbeispiel der vorliegenden Erfindung wird eine solche SNR-Schätzung verwendet, und das geschätzte SNR als Qualitätswert ausgegeben, um die Zuverlässigkeit der Detektion eines Maximums beurteilen zu können.

Die SNIR-Schätzung (SNIR; SNIR = Signal to Noise plus Interference Ratio) ist ein geeignetes Qualitätsmaß, wenn nur ein Ausbreitungspfad vorliegt bzw. wenn der erste Pfad wesentlich stärker als die folgenden ist bzw. alle folgenden Pfade wesentlich später als der erste Pfad eintreffen und schwächer als dieser sind. Die SNIR-Schätzung ist bei speziellen Einstellungen zuverlässig für SNIRs zwischen -20db und +10db. Zur Ermittlung der SNIR-Schätzung wird das Maximum der quadrierten Korrelationsbeträge im Sub-Sample-Raster bestimmt.

Eine Schätzung des durchschnittlichen Störabstandes zu Rauschen, Interferenzen und anderen Störquellen wie Quantisierung und Intermodulation findet während des gesamten empfangenen Burst statt. Dabei wird nur der erste auflösbare Pfad als Nutzsignal betrachtet. Alle folgenden Pfade werden wie Interferenzen behandelt. Dementsprechend kann ein hohes SNR geschätzt werden, wenn zwei Pfade unauflösbar nahe beieinander liegen. Trotzdem kann der zweite Pfad die TOA-Schätzung des ersten Pfades stark verfälschen. Daraus folgt, dass das SNIR-Qualitätsmaß nur für auflösbare Pfade geeignet ist, von denen der erste der stärkste ist.

Bei der SNIR-Schätzung und bei einer Eintastung eines Bits in einen langen Burst entstehen durch drei Einflüsse Fehler. Zum einen ist die Energie der abgestrahlten Sequenz für ein übertragenes Bit ==0 und ganz leicht anders als für ein übertragenes Bit==1. Ferner entsteht ein Fehler, wenn der Korrelationspeak beim Sampling nicht exakt gefunden wird, sondern wenn nur ein Punkt auf dessen Flanke gefunden wird. Zudem führt ein Frequenzversatz zu einem Fehler.

Gemäß einem weiteren Ausführungsbeispiel wird auf der Korrelationsbetragssequenz 112 ein Wendepunkt vor dem Hauptmaximum im betrachteten Fenster gesucht. Das heißt, zuerst wird das Hauptmaximum bestimmt, dann wird auf der Korrelationsbetragskurve 112 zeitlich zurückgeschritten, bis der erste Wendepunkt gefunden wird. Für die Suche des Wendepunktes wird die erste und die zweite Ableitung der Korrelationsbetragsfunktion 112 benötigt. Da diese Funktion nur abgetastet vorliegt, können die Ableitungen nur näherungsweise und ebenfalls nur abgetastet berechnet werden. Die Lage des Wendepunktes ist also zunächst nur im Über-Abtastraster oder im Abtastraster detektierbar. Um die Lage des Wendepunktes hoch-genau zu bestimmen, muss zum Schluss noch eine beispielsweise lineare Interpolation zwischen den Abtastwerten bzw. den Abtastzeitpunkten um den Wendepunkt vorgenommen werden. Aus dieser sehr fein aufgelösten Schätzung der Wendepunktposition kann schließlich die time of arrival hoch genau bestimmt werden. Eine Interpolation zwischen benachbarten Samples kann beispielsweise der Fig. 5a entnommen werden. Einzelne Samples beispielsweise, die maximalen Korrelationsbetragswerte 260, 560, 560' sind durch Kreuze gekennzeichnet und die durchgehende Linie, die die einzelnen Samples verbindet, stellt eine Interpolation der einzelnen Samples dar.

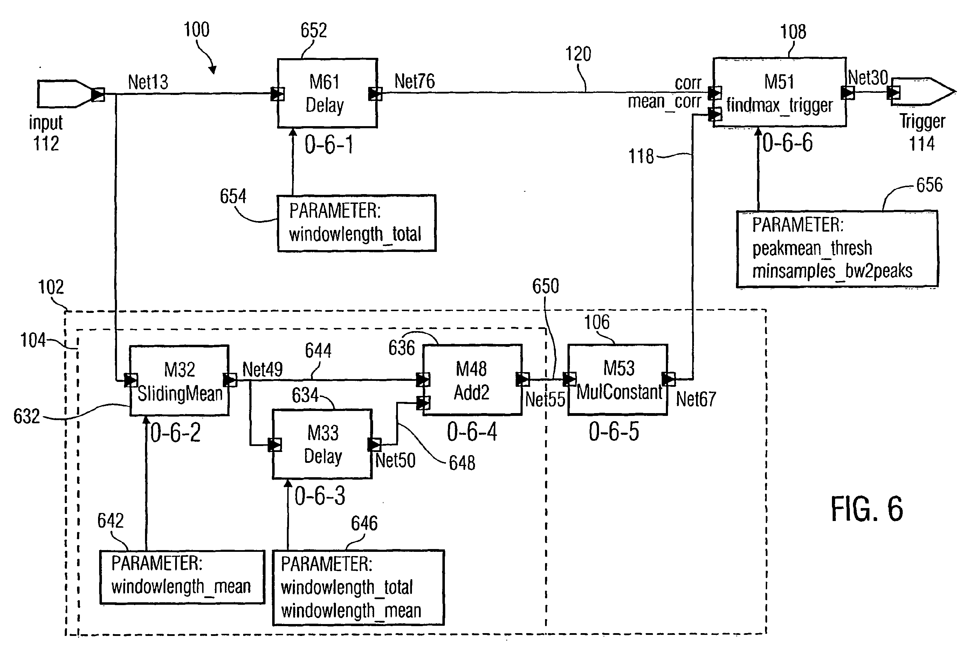

Fig. 6 zeigt eine schematische Darstellung eines weiteren Ausführungsbeispiels einer Vorrichtung 100 zum Detektieren eines Korrelationsmaximalwerts aus einer fortlaufenden Folge von Korrelationsbetragswerten 112. Die Folge von Korrelationsbetragswerten 112 wird der Vorrichtung 100 zum Detektieren als Input 112 bereitgestellt. Abhängig von der Detektion eines Korrelationsmaximalwerts wird das Triggersignal 114 ausgegeben. Die Vorrichtung 100 zur Detektion des Korrelationsmaximalwerts weist eine Vorrichtung 102 zum Ermitteln eines Schwellwerts mit einer Einrichtung 104 zum Bestimmen eines Referenzwerts und einer Einrichtung 106 zum Bestimmen eines Schwellwerts auf. Ferner weist die Vorrichtung 100 zur Detektion eines Korrelationsmaximalwerts eine Einrichtung 108 zum Vergleichen des Schwellwerts 118 mit dem zu beurteilenden Korrelationsbetragswerts 120 auf.

In diesem Ausführungsbeispiel weist die Einrichtung 104 zum Bestimmen eines Referenzwerts eine Einrichtung 632 zum Bilden eines gleitenden Mittelwerts, eine Verzögerungseinrichtung 634 und eine Additionseinrichtung 636 auf. Die Einrichtung 632 zum Bilden eines fortlaufenden Mittelwerts ist ausgebildet, um fortlaufend einen Mittelwert über empfangene Korrelationsbetragswerte der Folge von Korrelationsbetragswerten 112 zu bilden. Der Mittelwert wird dabei über eine Intervalllänge gebildet, die durch den Parameter 642 windowlength_mean bestimmt wird. Ein aktuell bereitgestellter gleitender Mittelwert wird als erster Referenzwert 644 an die Additionseinrichtung 636 sowie an die Verzögerungseinrichtung 634 bereitgestellt. Die Verzögerungseinrichtung 634 ist ausgebildet um dem empfangenen Referenzwert 644 um eine Anzahl von Samples zu verzögern, deren Anzahl von dem Parameter 646 windowlength_total und windowlength_mean abhängt. Die Verzögerungseinrichtung 634 ist ausgebildet, um den verzögerten Referenzwert als zweiten Referenzwert 648 an die Additionseinrichtung bereitzustellen. Die Additionseinrichtung 636 ist ausgebildet, um den ersten Referenzwert 644, der aus einem ersten Intervall gebildet wurde, und den zweiten Referenzwert 648 der aus einem zeitlich davor liegenden Intervall gebildet wurde, zu addieren und als Referenzwert 650 an die Einrichtung 106 zum Bestimmen des Schwellwerts 118 bereitzustellen. In diesem Ausführungsbeispiel ist die Einrichtung 106 zum Bestimmen des Schwellwerts eine Multipliziereinrichtung, die den Referenzwert 650 mit einer vordefinierten Konstante multipliziert und das Produkt als Schwellwert 118 an die Einrichtung 108 zum Vergleichen bereitstellt. Alternativ kann eine Gewichtung des Referenzwertes 650 auch in der Einrichtung 108 zum Vergleichen erfolgen.

Die Vorrichtung 100 zur Detektion eines Korrelationsmaximalwerts weist eine weitere Verzögerungseinrichtung 652 auf, die ausgebildet ist, um die Korrelationsbetragswerte der Folge von Korrelationsbetragswerten 112 um eine durch den Parameter 654 windowlength_total definierte Anzahl von Samples zu verzögern und an die Einrichtung 108 zum Vergleichen bereitzustellen. Dadurch wird gewährleistet, dass die Einrichtung 108 zum Vergleichen zu einem definierten Beurteilungszeitpunkt einen zu beurteilenden Korrelationsbetragswert 120 und einen, zu dem zu beurteilenden Korrelationsbetragswert 120 berechneten Schwellwert 118 empfängt. An die Einrichtung 108 zum Vergleichen werden zusätzlich die Parameter 656 peakmean_thresh und minsamples_bw2peaks bereitgestellt.

In der folgenden Beschreibung der Vorrichtung 100 zum Detektieren eines Korrelationsmaximalwerts wird die weitere Verzögerungseinrichtung 652 als Block 0-6-1, die Einrichtung 632 zum Berechnen des Mittelwerts als Block 0-6-2, die Verzögerungseinrichtung 634 als Block 0-6-3, die Additioneinrichtung 636 als Block 0-6-4, die Multiplizierungseinrichtung 106 als Block 0-6-5 und die Einrichtung zum Vergleichen 108 als Block 0-6-6 bezeichnet. Die Folge von Korrelationsbetragswerten 112 wird an den Block 0-6-1 und den Block 0-6-2 über das Signal Net13 bereitgestellt. Der Block 0-6-1 ist über das Signal Net76 mit dem Block 0-6-6 verbunden. Die Blöcke 0-6-3 und 0-6-4 sind über das Net49 mit dem Block 0-6-2 verbunden. Der Block 0-6-3 ist über das Net50 mit dem Block 0-6-4 verbunden. Der Block 0-6-4 ist über das Net55 mit dem Blcok 0-6-5 und der Block 0-6-5 über das Net67 mit dem Block 0-6-6 verbunden. Die genannten Netze können in einer Simulationsumgebung (nicht gezeigt in den Figuren) vom Datentyp reell sein und eine Datenrate B_block_4(tbc) aufweisen.

Die Vorrichtung 100 zur Detektion eines Korrelationsmaximas wird als Block 0-6 bezeichnet. Im Block 0-6 sollen alle Korrelationsmaxima gefunden und für ein jedes gefundenes Maximum ein Triggerimpuls an eine Funktionsebene 0 (nicht gezeigt in den Figuren) gegeben werden. Der Ausgangtrigger dieser Ebene besitzt also nur den Wert Null, falls kein neues Maximum detektiert wird und im Falle einer Maximumsdetektion den Wert 1. Um alle Korrelationspeaks im Korrelationssignal Input 112 zu finden und ansprechend auf ein Finden eines Korrelationspeaks einen Triggerimpuls auszugeben, muss in der Ebene 0-6 zunächst der Korrelationsfloor des Eingangssignals Input berechnet werden, mit dessen Hilfe im Block 0-6-6 am Ende dieser Ebene pro Sample eine Entscheidung gefällt werden kann, ob ein neues Maximum vorliegt oder nicht. Zur Berechnung des Korrelationsfloors in der Einrichtung 104 werden die Parameter windowlength_mean und windowlength_total benötigt, die von extern in diese Hierarchieebene übergeben werden.

Als erstes wird im Block 0-6-2 der gleitende Mittelwert des am Eingang ankommenden Signals Input über ein Fenster der Länge windowlength_mean samples berechnet. Bei der Entscheidung, ob bei einem aktuell zu beurteilenden Korrelationsbetragswert 120 ein Korrelationsmaximalwert vorliegt, muss der Korrelationsfloor vor und nach diesem Punkt betrachtet werden, aber gleichzeitig ein vorgegebener Bereich um diesem Punkt ausgespart werden, um falsche Entscheidungen im Block 0-6-6 zu vermeiden. Der nicht benützte Bereich vor bzw. nach dem betrachteten Punkt beträgt jeweils (windowlength_total - windowlength_mean) - samples.

Um beide Bedingungen zu erfüllen, wird das aus der Mittelwertbildung resultierende Signal mit dem in Block 0-6-3 um (2 * windowlength_total - windowlength_mean)-samples verzögerte Signal in Block 0-6-4 addiert. In Fig. 2 entspricht dies einer Addition des Mittelwertblocks A mit dem Mittelwertblock B.

Da die Addition beider Mittelwertblöcke A, B (gezeigt in Fig. 2) eine Verdoppelung der Leistung nach sich zieht, werden in Block 0-6-5 die Samples des eingehenden Signals mit 0,5 multipliziert. Das am Ende der Berechnung des Korrelationsfloors erhaltene Signal wird mit mean_corr bezeichnet.

Damit der aus dem Mittelwertblöcken A, B resultierende Kombinationsfloor-Wert auch zur Entscheidung des zu beurteilenden Korrelationsbetragswerts beiträgt, wird das am Eingang ankommende Korrelationssignal im Block 0-6-1 um (windowlength_total)-samples verzögert. Das verzögerte Korrelationssignal wird mit corr bezeichnet. Die beiden Signale corr und mean_corr können jetzt an den Block 0-6-6 zur Bestimmung der Position der Korrelationsmaxima gegeben werden.

An den Block 0-6-6 werden die Signale corr und mean_corr angelegt, die zuvor in der Ebene 0-6 berechnet wurden. Mit corr ist dabei das verzögerte Korrelationssignal und mit mean_corr der jeweils dazugehörigen Werte des Korrelationsfloors bezeichnet.

Außerdem werden in der Ebene 0-6-6 die Parameter peakmean_thresh und minsamples_bw2peaks benötigt, die von extern an diese Ebene weitergegeben werden.

Der Block 0-6-6 liefert für je ein Eingangssamplepaar (corr, mean_corr) ein Ausgangssampletrigger mit dem Elementen 0 oder 1. Für jedes detektierte Maximum wird im Sample-takt B_clock_4 eine Eins nach außen gegeben, ansonsten eine Null.

Beim Start des Blocks 0-6-6 wird der interne Parameter samples_lastpeak auf den Wert Null gesetzt. Der Parameter samples_lastpeak wird zur Vermeidung einer fälschlichen Detektion eines Peaks aufgrund einer Mehrpfadausbreitung genutzt.

Bevor eine erstes Entscheidung, ob ein Maximum vorliegt, gefällt werden kann, müssen zunächst zwei hintereinanderfolgende Samples des Signals corr in einem buffer_corr und zwei dazugehörige Werte des Signals mean_corr in einem buffer_meancorr vorliegen.

Für das erste Eingangssample-Paar (corr, mean_corr) wird also, ohne eine Entscheidung zu treffen, das Ausgangssignal trigger = 0 nach außen gegeben. Wurde das zweite Sample-Paar eingelesen, so kann eine Maximumentscheidung für das zuerst eingelesene Korrelationssample getroffen werden. Falls es ein Maximum ist, wird der Parameter samples_lastpeak = 1 und trigger = 1 gesetzt, also eine 1 nach außen gegeben. Liegt aber kein Maximum vor, so wird eine Null am Triggersignal weitergegeben.

Dies führt zu einer Verzögerung des Ausgangssignals gegenüber dem Eingangssignal um 1, denn man erhält erst im (n + 1)-ten Ausgangssample "position" eine Auskunft, ob im n-ten Korrelationsample corr ein neues Maximum detektiert wurde.

Im weiteren Verlauf wird vor der Maximumentscheidung das älteste Sample im buffer buffer_corr durch das neue Eingangssample corr und entsprechend das älteste Sample im buffer buffer_meancorr durch das Eingangssample mean_corr ersetzt. Außerdem wird trigger = 0 gesetzt, und der Parameter samples_lastpeak, falls dieser ungleich Null ist, um 1 hochgesetzt. Gilt dann für diesen Parameter

$$samples\_lastpeak = minsamples\_bw2peaks - 1,$$

so wird samples-lastpeak wieder gleich Null gesetzt, und dieser Wert bis zur nächsten Maximumsdetektion nicht mehr verändert.

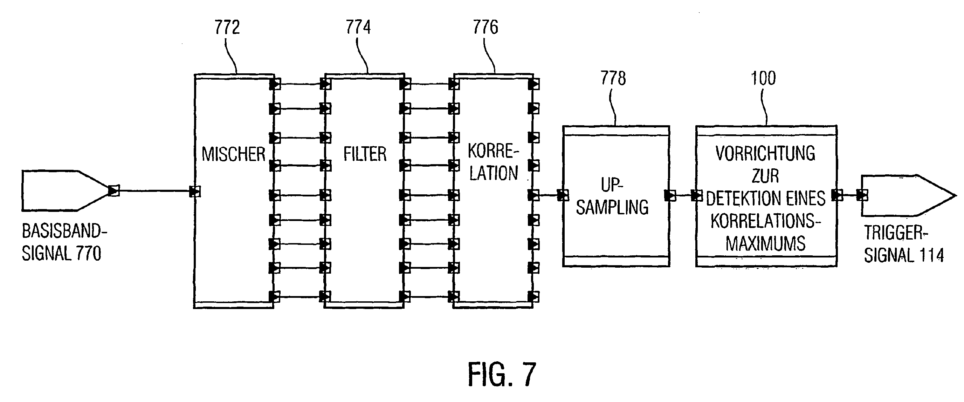

Fig. 7 zeigt ein Blockschaltbild eines Empfängers mit einer Vorrichtung 100 zur Detektion eines Korrelationsmaximalwerts gemäß einem Ausführungsbeispiel der vorliegenden Erfindung. Ein Mischer 772 gibt ein ins (komplexe) Basisbad gemischtes Empfangssignal 770 in einem Sample-Takt B_clock an einen Filter 774 weiter. Der Filter 774 ist dem Mischer 772 nachgeschaltet. Ein von dem matched-Filter 774 generiertes Empfangssignal wird in einem nachfolgenden Korrelationsblock 776 mit einer bekannten Signalfolge korreliert. Der Korrelationsblock 776 ist ausgebildet, um fortlaufend Korrelationsbetragswerte bereitzustellen aus denen nachfolgend das Maximum bestimmt wird. Die Korrelationsbetragswerte können in einem folgenden Up-sample-Block 778 upgesampelt werden. In der nachfolgenden Vorrichtung zur Detektion eines Korrelationsmaximalwerts wird die Position der Korrelationsmaximas berechnet und ein Triggersignal ausgegeben.

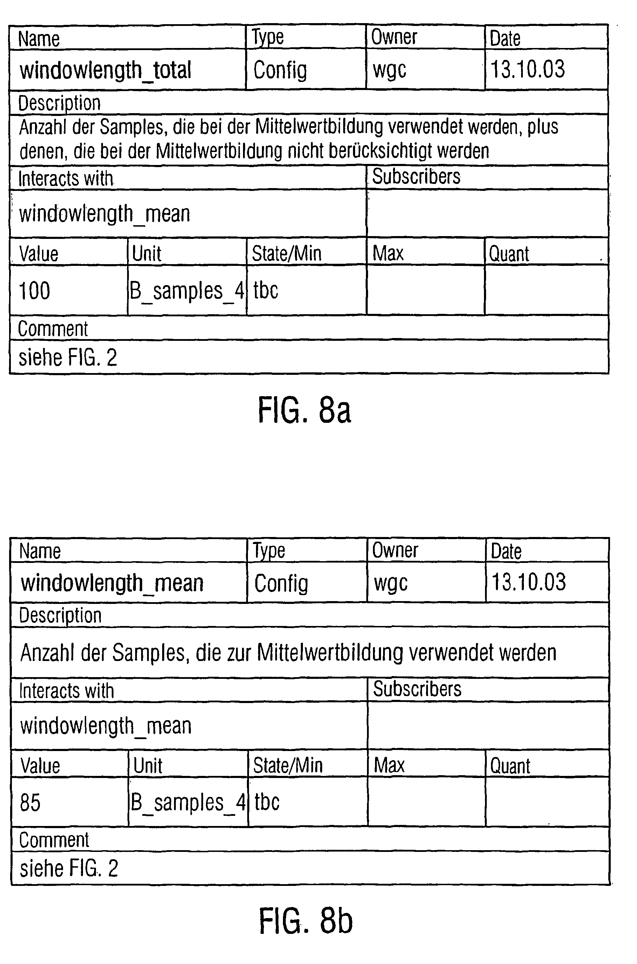

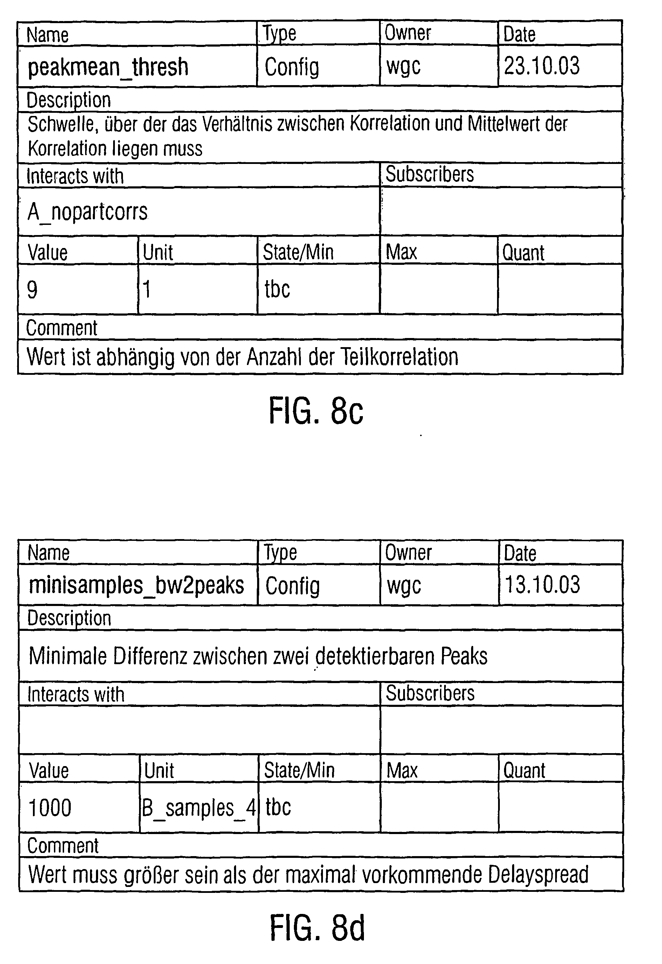

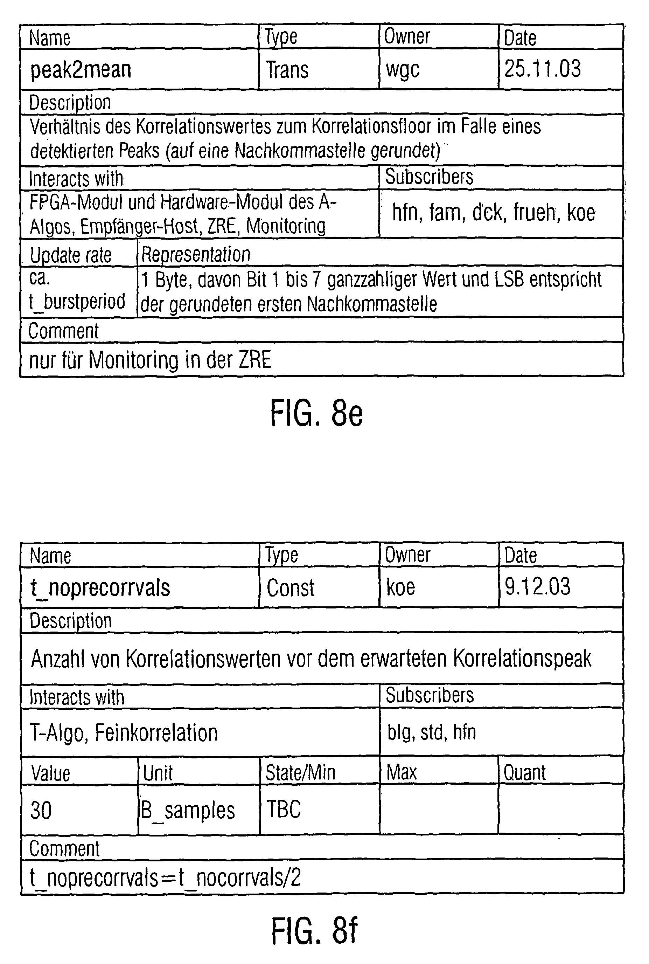

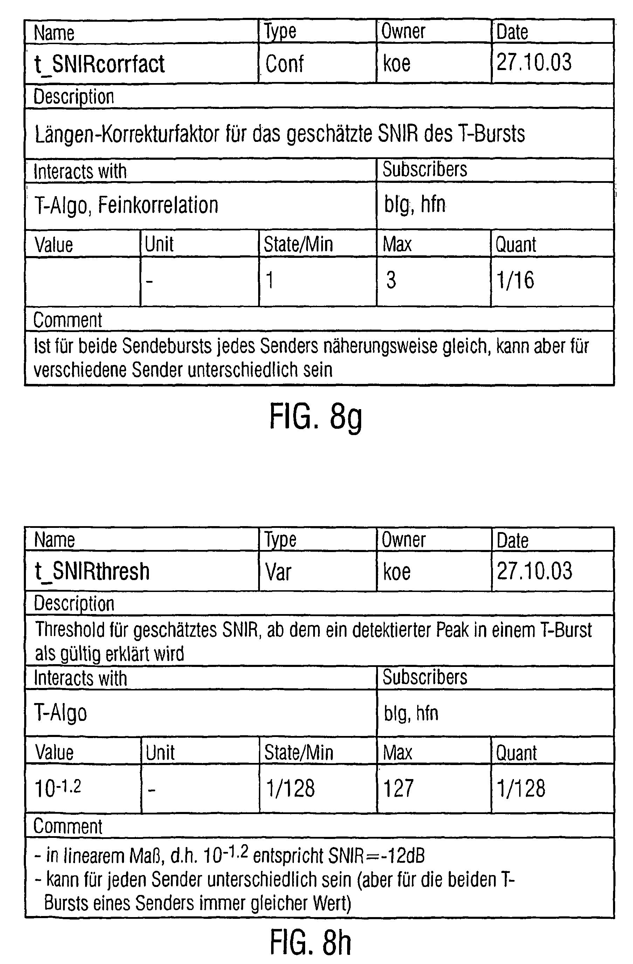

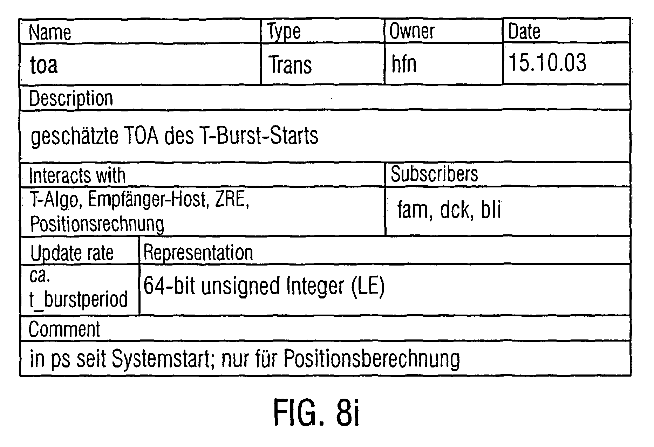

In den nachfolgenden Figuren 8a bis 8i werden die vorangegangenen Parameter definiert.

Der Parameter windowlength_total definiert die Anzahl der Samples, die bei der Mittelwertbildung verwendet werden, plus denen, die bei der Mittelwertbildung nicht berücksichtigt werden, da sie zwischen dem Intervall und dem zu beurteilenden Korrelationsbetragswert liegen.

Der Parameter windowlength_mean definiert die Anzahl der Samples, die zur Mittelwertbildung verwendet werden.

Der Parameter peakmean_thresh beschreibt die Schwelle, über der das Verhältnis zwischen Korrelation und Mittelwert der Korrelation liegen muss.

Der Parameter meansamples_bw2peaks definiert die minimale Differenz zwischen zwei detektierbaren Peaks.

Der Parameter peak2mean definiert das Verhältnis des Korrelationsbetragswertes zum Korrelationsfloor im Falle eines detektierten Peaks, auf eine Nachkommastelle gerundet.

Der Parameter t_noprecorrvals definiert eine Anzahl von Korrelationsbetragswerten vor dem erwarteten Korrelationspeak.

Der Parameter t_SNIRcorrfact definiert einen Längen-Korrekturfaktor für das geschätzte SINR des T-Bursts.

Der Parameter t_SNIRthresh definiert einen Tresh-hold für ein geschätztes SNIR, ab dem ein detektierter Peak in einem T-Burst als gültig erklärt wird.

toa definiert eine geschätzte time of arrival des T-Burst-Starts, wobei der T-Burst die, dem Empfänger bekannte und zur Korrelation verwendete Signalfolge ist.

Obwohl in den vorangegangenen Ausführungsbeispielen auf ein digitales Kommunikationssystem Bezug genommen wurde, kann der erfindungsgemäße Ansatz zur Detektion eines Schwellwerts bzw. eines Maximums für beliebige Wertefolgen genutzt werden. Handelt es sich bei der Wertefolge um eine Folge von Korrelationswerten oder Korrelationsbetragswerten, so können diese durch Kreuz-Korrelationen, Auto-Korrelationen oder andere Korrelationsarten ermittelt werden. Die einzelnen Korrelationsbeträge können dabei auch aus einzelnen Teilkorrelationsbeträgen zusammengesetzt sein. Die Detektion eines Korrelationsbetragsmaximum bzw. der Zeitpunkt des Auftretens des Korrelationsbetragsmaximums und somit der Eintreffzeitpunkt einer empfangenen Wertefolge kann neben der Aufsynchronisierung auch für alle anderen Zwecke genutzt werden, bei denen ein Eintreffzeitpunkt einer bekannten und zur Korrelation verwendeten Folge bestimmt werden soll.

Abhängig von den Gegebenheiten kann das erfindungsgemäße Verfahren zum Ermitteln eines Schwellwerts sowie das erfindungsgemäße Verfahren zur Detektion eines Korrelationsmaximalwerts in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, das das entsprechende Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. Mit anderen Worten ausgedrückt, kann die Erfindung somit als ein Computer-Programm mit einem Programmcode zur Durchführung des Verfahrens realisiert werden, wenn das Computer-Programm auf einem Computer abläuft.

**Patentansprüche**

1. Vorrichtung (102) zum Ermitteln eines Schwellwerts (118) zur Bestimmung, ob ein zu beurteilender Korrelationsbetragswert (120; 260) aus einer Folge von Korrelationsbetragswerten (112) ein Korrelationsmaximalwert ist, mit folgenden Merkmalen:

einer Einrichtung (104) zum Bestimmen eines Referenzwertes, die ausgebildet ist, um ein zweigeteiltes Mittelungsfenster um den zu beurteilenden Korrelationsbetragswert (120; 260) zu legen, um ein Intervall (A) und ein weiteres Intervall (B) von Korrelationsbetragswerten der Folge von Korrelationsbetragswerten (112) zu bestimmen, wobei das erste und das weitere Intervall jeweils eine definierte Anzahl von Korrelationsbetragswerten aufweisen und der zu beurteilende Korrelationsbetragswert zwischen dem ersten Intervall (A) und dem weiteren Intervall (B) liegt, und

wobei die Einrichtung (104) zum Bestimmen eines Referenzwertes ferner ausgebildet ist, um einen Referenzwert (116) aus Korrelationsbetragswerten innerhalb des Intervalls (A) und einen weiteren Referenzwert aus Korrelationsbetragswerten innerhalb des weiteren Intervalls (B) zu bestimmen; und

eine Einrichtung (106) zum Bestimmen des Schwellwerts (118) in Abhängigkeit von dem Referenzwert und dem weiteren Referenzwert.

2. Vorrichtung zum Ermitteln gemäß Anspruch 1, wobei die Einrichtung (104) zum Bestimmen ausgebildet ist, um den Referenzwert (116) durch eine Mittelwertbildung aus den Korrelationsbetragswerten (112) innerhalb des Intervalls (A, B), zu bestimmen.

3. Vorrichtung zum Ermitteln gemäß einem der Ansprüche 1 oder 2, wobei die Einrichtung (106) zum Bestimmen des Schwellwerts ausgebildet ist, um den Schwellwert (118) durch eine Gewichtung des Referenzwerts (116) mit einem vorbestimmten Gewichtungsfaktor zu bestimmen.

4. Vorrichtung zum Ermitteln gemäß einem der Ansprüche 1 bis 3, ferner mit einer Korrelationseinrichtung (776) zum Bestimmen der Korrelationsbetragswerte der Folge von Korrelationsbetragswerten (112) aus einer Korrelation zwischen einer Empfangsfolge und einer Sendefolge.

5. Vorrichtung zum Ermitteln gemäß einem der Ansprüche 1 bis 4, wobei zwischen dem zu beurteilenden Korrelationsbetragswert (120; 260) und dem Intervall (A, B) eine Mehrzahl (C) von Korrelationsbetragswerten der Folge von Korrelationsbetragswerten (112) liegen.

6. Vorrichtung zum Ermitteln gemäß Anspruch 5, wobei die Anzahl (C) der zwischen dem zu beurteilenden Wert (120; 260) und dem Intervall (A, B) liegenden Korrelationsbetragswerte von der Länge der Sendefolge abhängt.

7. Vorrichtung zum Ermitteln gemäß Anspruch 1, wobei die Korrelationsbetragswerte der Folge von Korrelationsbetragswerten (112) zeitlich aufeinanderfolgen; und

wobei die Einrichtung (104) zum Bestimmen der Referenzwerte eine Mittelwerteinrichtung (632) zum Bereitstellen eines gleitenden Mittelwerts (644) über eine, der Intervallgröße (A) und der weiteren Intervallgröße (B) entsprechenden Anzahl von Korrelationsbetragswerten aufweist, und

eine Verzögerungseinrichtung (634) zum Bereitstellen eines verzögerten Mittelwertes (648), die ausgebildet ist, um den Mittelwert (644), abhängig von der Breite des Intervalls (A) und den Abstand des Intervalls (A) und des weiteren Intervalls (B) zu verzögern; und

einer Additionseinrichtung (636) zum Addieren des Mittelwerts (644) und des verzögerten Mittelwerts (648), wobei der Mittelwert dem weiteren Referenzwert und der verzögerte Mittelwert dem Referenzwert entspricht.

8. Vorrichtung zum Ermitteln gemäß einem der Ansprüche 1 bis 7, wobei die Korrelationsbetragswerte der Folge von Korrelationsbetragswerten (112) Kreuzkorrelationsbetragswerte sind.

9. Vorrichtung zum Ermitteln gemäß einem der Ansprüche 1 bis 8, wobei die Folge von Korrelationsbetragswerten (112) eine fortlaufende Folge von Korrelationsbetragswerten ist.

10. Vorrichtung zur Detektion eines Korrelationsmaximalwerts aus einer Folge von Korrelationsbetragswerten (112) mit folgenden Merkmalen:

einer Vorrichtung (102) zum Ermitteln eines Schwellwerts (118) gemäß einem der Ansprüche 1 bis 9; und
einer Einrichtung (108) zum Vergleichen des zu beurteilenden Korrelationsbetragswerts (120; 260) mit dem, für den zu beurteilenden Korrelationsbetragswert ermittelten Schwellwert (118), die ausgebildet ist, um abhängig von dem Vergleichsergebnis ein Triggersignal (114) bereitzustellen, wobei das Triggersignal anzeigt, ob ein zu beurteilender Korrelationsbetragswert ein Korrelationsmaximalwert ist.

11. Vorrichtung zur Detektion gemäß Anspruch 10, wobei die Einrichtung (108) zum Vergleichen ferner eine Speichereinrichtung zum Speichern eines vorangegangenen zu beurteilenden Korrelationsbetragswerts (360a) aufweist, und ferner ausgebildet ist, um das Triggersignal (114), abhängig von einem Vergleich des zu beurteilenden Korrelationsbetragswertes (120) mit dem vorangegangenen, gespeicherten Korrelationsbetragswert (360a) bereitzustellen.

**12.** Vorrichtung zur Detektion gemäß einem der Ansprüche 10 oder 11, wobei die Einrichtung (108) zum Vergleichen eine Deaktivierungseinrichtung aufweist, die ausgebildet ist, um die Einrichtung zum Vergleichen als Folge einer Detektion eines Körrelationsmaximalwerts für eine vorbestimmte Latenzzeit zu deaktivieren, wobei die Latenzzeit von einem vorbestimmten zeitlichen Abstand zweier periodisch aufeinanderfolgender Korrelationsmaximalwerte abhängt.

**13.** Vorrichtung zur Detektion gemäß einem der Ansprüche 10 bis 12, ferner mit einer Einrichtung zum Bestimmen eines Wendepunktes der Folge von Korrelationsbetragswerten (112), die ausgebildet ist, um ansprechend auf eine Detektion eines Korrelationsmaximalwertes eine Zeitinformation über ein Auftreten eines, dem Korrelationsmaximalweit vorangegangenen Wendepunktes bereitzustellen.

**14.** Vorrichtung zur Detektion gemäß Anspruch 13, wobei die Zeitinformation.eine Anzahl von Korrelationsbetragswerten angibt, die zwischen dem Korrelationsmaximalwert und dem Wendepunkt liegen.

**15.** Vorrichtung zur Detektion gemäß einem der Ansprüche 13 oder 14, ferner mit einer Interpolationseinrichtung, die ausgebildet ist, um die Folge von Korrelationsbetragswerten (112) zu interpolieren, und
wobei die Einrichtung zum Bestimmen eines Wendepunktes ausgebildet ist, um basierend auf der interpolation die Wendepunktberechnung durchzuführen.

**16.** Vorrichtung zur Detektion gemäß einem der Ansprüche 10 bis 15, ferner mit einer Einrichtung zum Ermitteln einer Differenz zwischen dem Betrag des detektierten Korrelationsmaximalwerts und dem Referenzwert.

**17.** Verfahren zum Ermitteln eines Schwellwerts zur Bestimmung, ob ein zu beurteilender Korrelationsbetragswert aus einer Folge von Korrelationsbetragswerten ein Korrelationsmaximalwert ist, das folgende Schritte aufweist:

Legen eines zweigeteilten Mittelungsfenster um den zu beurteilenden Korrelationsbetragswert, um ein Intervall (A) und ein weiteres Intervall (B) von Korrelationsbetragswerten der Folge von Korrelationsbetragswerten (112) zu bestimmen, wobei das erste und das weitere Intervall jeweils eine definierte Anzahl von Korrelationswerten aufweisen und der zu beurteilende Korrelationsbetragswert zwischen dem ersten Intervall (A) und dem weiteren Intervall (B) liegt;
Bestimmen eines Referenzwertes (116) aus Korrelationsbetragswerten innerhalb des Intervalls (A) und Bestimmen eines weiteren Referenzwertes aus Korrelationsbetragswerten innerhalb des weiteren Intervalls (B); und
Bestimmen des Schwellwerts (118) in Abhängigkeit von dem Referenzwert und dem weiteren Referenzwert.

**18.** Verfahren zur Detektion eines Korrelationsmaximalwerts aus einer Folge von Korrelationsbetragswerten, das folgende Schritte aufweist:

Ermitteln eines Schwellwerts (118) gemäß Anspruch 17; und
Vergleichen des zu beurteilenden Korrelationsbetragswerts (120; 260) mit dem, für den zu beurteilenden Korrelationsbetragswert ermittelten Schwellwert (118), und abhängig von dem Vergleichsergebnis, Bereitstellen eines Triggersignals (114), wobei das Triggersignal anzeigt, ob ein zu beurteilender Korrelationsbetragswert ein Korrelationsmaximalwert ist.

**19.** Computer-Programm mit einem Programmcode zur Durchführung des Verfahrens gemäß einem der Ansprüche 17 oder 18, wenn das Computerprogramm auf einem Computer abläuft.

## Claims

**1.** A device (102) for ascertaining a threshold value (118) for determining whether a correlation magnitude value (120; 260), to be assessed, from a sequence of correlation magnitude values (112) is a correlation maximum value, the device comprising:

a means (104) for determining a reference value which is implemented to place an averaging window divided into two around the correlation magnitude value (120; 260) to be assessed to determine an interval (A) and another interval (B) of correlation magnitude values of the sequence of correlation magnitude values (112), wherein the first and the other interval each comprise a defined number of correlation magnitude values and the correlation magnitude value to be assessed is between the first interval (A) and the other interval (B), and wherein the means (104) for determining a reference value (116) is further implemented to determine a reference value (116) from correlation magnitude values within the interval (A) and another reference value from correlation magnitude values within the other interval (B); and

a means (106) for determining the threshold value (118) in dependence on the reference value and the other reference value.

2. The device for ascertaining as claimed in claim 1, wherein the means (104) for determining is configured to determine the reference value (116) by means of taking the mean from the correlation magnitude values (112) within the interval (A, B).

3. The device for ascertaining as claimed in claim 1 or 2, wherein the means (106) for determining the threshold value is configured to determine the threshold value (118) by weighting the reference value (116) with a predetermined weighting factor.

4. The device for ascertaining as claimed in any one of claims 1 to 3, further having a correlation means (776) for determining the correlation magnitude values of the sequence of correlation magnitude values (112) from a correlation between a receive sequence and a transmit sequence.

5. The device for ascertaining as claimed in any one of claims 1 to 4, wherein there are a plurality (C) of correlation magnitude values of the sequence of correlation magnitude values (112) between the correlation magnitude value (120; 260) to be assessed and the interval (A, B).

6. The device for ascertaining as claimed in claim 5, wherein the number (C) of correlation magnitude values ranging between the value (120; 260) to be assessed and the interval (A, B) depends on the length of the transmit sequence.

7. The device for ascertaining as claimed in claim 1, wherein the correlation magnitude values of the sequence of correlation magnitude values (112) are successive in time; and
wherein the means (104) for determining the reference values comprises an mean-value means (632) for providing a moving mean value (644) across a number of correlation magnitude values corresponding to the interval size (A) and the further interval size (B), and
a delaying means (634) for providing a delayed mean value (644), configured to delay the mean value (644) depending on the width of the interval (A) and the distance of the interval (A) and the further interval (B); and
an addition means (636) for adding the mean value (644) and the delayed mean value (644), the mean value corresponding to the further reference value, and the delayed mean value to the reference value.

8. The device for ascertaining as claimed in any one of claims 1 to 7, wherein the correlation magnitude values of the sequence of correlation magnitude values (112) are cross-correlation magnitude values.

9. The device for ascertaining as claimed in any one of claims 1 to 8, wherein the sequence of correlation magnitude values (112) is a continuous sequence of correlation magnitude values.

10. A device for detecting a correlation maximum value from a sequence of correlation magnitude values (112), comprising:

a device (102) for ascertaining a threshold value (118) as claimed in any one of claims 1 to 9; and
a means (108) for comparing the correlation magnitude value (120; 260) to be assessed with the threshold value (118) ascertained for the correlation magnitude value to be assessed, the means being configured to provide a trigger signal (114) in dependence on the comparison result, the trigger signal indicating whether a correlation magnitude value to be assessed is a correlation maximum value.

11. The device for detecting as claimed in claim 10, the means (108) for comparing further comprising a storage means for storing a preceding correlation magnitude value (360a) to be assessed, and further being configured to provide the trigger signal (114) in dependence on a comparison of the correlation magnitude value (120) to be assessed

**EP 1 825 602 B1**

with the preceding, stored correlation magnitude value (360a).

12. The device for detecting as claimed in claim 10 or 11, wherein the means (108) for comparing comprises a deactivating means configured to deactivate the means for comparing for a predetermined latency period as a result of detecting a correlation maximum value, the latency period depending on a predetermined temporal distance of two periodically successive correlation maximum values.

13. The device for detecting as claimed in any one of claims 10 to 12, further comprising a means for determining a reversal point of the sequence of correlation magnitude values (112), configured to provide, in response to a correlation maximum value being detected, temporal information about an occurrence of a reversal point preceding the correlation maximum value.

14. The device for detecting as claimed in claim 13, wherein the temporal information indicates a number of correlation magnitude values ranging between the correlation maximum value and the reversal point.

15. The device for detecting as claimed in claim 13 or 14, further comprising an interpolation means configured to interpolate the sequence of correlation magnitude values (112), and the means for determining a reversal point being configured to perform the calculation of the reversal point on the basis of the interpolation.

16. The device for detecting as claimed in any one of claims 10 to 15, further comprising a means for ascertaining a difference between the magnitude of the correlation maximum value detected and the reference value.

17. A method for ascertaining a threshold value for determining whether a correlation magnitude value, to be assessed, from a sequence of correlation magnitude values is a correlation maximum value, the method comprising:

placing an averaging window divided into two around the correlation magnitude value to be assessed to determine an interval (A) and another interval (B) of correlation magnitude values of the sequence of correlation magnitude values (112), wherein the first and the other interval each comprise a defined number of correlation magnitude values and the correlation magnitude value to be assessed is between the first interval (A) and the other interval (B);
determining a reference value (116) from correlation magnitude values within the interval (A) and determining another reference value from correlation magnitude valued within the other interval (B); and
determining the threshold value (118) in dependence on the reference value and the other reference value.

18. A method for detecting a correlation maximum value from a sequence of correlation magnitude values, the method comprising:

ascertaining a threshold value (118) as claimed in claim 17; and comparing a correlation magnitude value (120; 260) to
be assessed with the threshold value (118)
ascertained for the correlation magnitude value to be assessed, and, depending on the comparison result, providing a trigger signal (114), the trigger signal indicating whether a correlation magnitude value to be assessed is a correlation maximum value.

19. A computer program having a program code for performing the method as claimed in claim 17 or 18, when the computer program runs on a computer.

**Revendications**

1. Dispositif (102) de recherche d'une valeur seuil (118) pour déterminer si une valeur de corrélation à évaluer (120 ; 260) parmi une série de valeurs de corrélation (192)est un maximum de corrélation, avec les caractéristiques suivantes :

une installation (104) pour déterminer une valeur de référence, qui est réalisée pour poser une fenêtre de moyennage bipartite autour de la valeur de corrélation à évaluer (120; 260), pour déterminer un intervalle (A) et un autre intervalle (B) de valeurs de corrélation de la série de valeurs de corrélation (112), le premier et l'autre intervalle présentant chacun un nombre défini de valeurs de corrélation et la valeur de corrélation à évaluer se trouvant entre le premier intervalle (A) et l'autre intervalle (B), et

l'installation (104) pour déterminer une valeur de référence étant en outre réalisée pour déterminer une valeur de référence (116) à partir de valeurs de corrélation à l'intérieur de l'intervalle (A) et une autre valeur de référence à partir de valeurs de corrélation à l'intérieur de l'autre intervalle (B) ; et

une installation (106) pour déterminer la valeur seuil (118) en fonction de la valeur de référence et de l'autre valeur de référence.

2. Dispositif de recherche selon la revendication 1, l'installation (104) étant réalisée pour la détermination afin de déterminer la valeur de référence (116) par la construction d'une moyenne à partir des valeurs de corrélation (112) à l'intérieur de l'intervalle (A, B).

3. Dispositif de recherche selon l'une quelconque des revendications 1 ou 2, l'installation (106) pour la détermination de la valeur seuil étant réalisée pour déterminer la valeur seuil (118) par une pondération de la valeur de référence (116) avec un facteur de pondération prédéterminé.

4. Dispositif de recherche selon l'une quelconque des revendications 1 à 3, avec en outre une installation de corrélation (776) pour déterminer les valeurs de corrélation de la série de valeurs de corrélation (112) à partir d'une corrélation entre une série de réception et une série d'émission.

5. Dispositif de recherche selon l'une quelconque des revendications 1 à 4, une multitude (C) de valeurs de corrélation de la série de valeurs de corrélation (112) se trouvant entre la valeur de corrélation à évaluer (120 ; 260) et l'intervalle (A, B).

6. Dispositif de recherche selon la revendication 5, le nombre (C) de valeurs de corrélation se trouvant entre la valeur à évaluer (120 ; 260) et l'intervalle (A, B) dépendant de la longueur de la série d'émission.

7. Dispositif de recherche selon la revendication 1, les valeurs de corrélation de la série de valeurs de corrélation (112) se faisant suite dans le temps ; et

l'installation (104) pour la détermination des valeurs de référence présentant une installation de moyennage (632) pour mettre en place une moyenne glissante (644) sur un nombre de valeurs de corrélation correspondant à la taille de l'intervalle (A) et à la taille de l'autre intervalle (B), et

une installation de retardement (634) pour la mise en place d'une moyenne différée (648), qui est réalisée pour retarder la moyenne (644) en fonction de la largeur de l'intervalle (A) et l'écart de l'intervalle (A) et de l'autre intervalle (B) ; et

une installation d'addition (636) pour additionner la moyenne (644) et la moyenne différée (648), la moyenne correspondant à l'autre valeur de référence et la moyenne différée à la valeur de référence.

8. Dispositif de recherche selon l'une quelconque des revendications 1 à 7, les valeurs de corrélation de la série de valeurs de corrélation (112) étant des valeurs de corrélation croisée.

9. Dispositif de recherche selon l'une quelconque des revendications 1 à 8, la série de valeurs de corrélation (112) étant une série continue de valeurs de corrélation.

10. Dispositif de détection d'un maximum de corrélation à partir d'une série de valeurs de corrélation (112) avec les caractéristiques suivantes :

un dispositif (102) pour chercher une valeur seuil (118) selon l'une quelconque des revendications 1 à 9 ; et une installation (108) pour la comparaison de la valeur de corrélation à évaluer (120 ; 260) avec la valeur seuil (118) trouvée pour la valeur de corrélation à évaluer, qui est réalisée pour mettre en place en fonction du résultat de la comparaison un signal de déclenchement (114), le signal de déclenchement indiquant si une valeur de corrélation à évaluer est un maximum de corrélation.

11. Dispositif de détection selon la revendication 10, l'installation (108) pour la comparaison présentant en outre une installation de stockage pour la mémorisation d'une valeur de corrélation à évaluer précédente (360a), et étant en outre réalisée pour mettre en place le signal de déclenchement (114) en fonction d'une comparaison de la valeur de corrélation à évaluer (120) avec la valeur de corrélation précédente mémorisée (360a).

12. Dispositif de détection selon la revendication 10 ou 11, l'installation (108) pour la comparaison présentant une installation de désactivation qui est réalisée pour désactiver l'installation de comparaison à la suite de la détection d'un maximum de corrélation pour un temps de latence prédéterminé, le temps de latence dépendant d'un écart temporel prédéterminé de deux maximums de corrélation qui se suivent l'un l'autre périodiquement.

13. Dispositif de détection selon l'une quelconque des revendications 10 à 12, avec en outre une installation pour déterminer un point d'inflexion de la série des valeurs de corrélation (112) qui est réalisée pour mettre en place, en réaction à la détection d'un maximum de corrélation, une information temporelle sur l'apparition d'un point d'inflexion précédant le maximum de corrélation.

14. Dispositif de détection selon la revendication 13, l'information temporelle indiquant un certain nombre de valeurs de corrélation qui se trouvent entre le maximum de corrélation et le point d'inflexion.

15. Dispositif de détection selon la revendication 13 ou 14, avec en outre une installation d'interpolation qui est réalisée pour interpoler la série de valeurs de corrélation (112), et l'installation pour déterminer un point d'inflexion étant réalisée pour exécuter le calcul du point d'inflexion sur la base de l'interpolation.

16. Dispositif de détection selon l'une quelconque des revendications 10 à 15, avec en outre une installation pour trouver une différence entre la magnitude du maximum de corrélation détecté et la valeur de référence.

17. Procédé de recherche d'une valeur seuil pour déterminer si une valeur de corrélation à évaluer parmi une série de valeurs de corrélation est un maximum de corrélation, qui présente les étapes suivantes :

poser une fenêtre de moyennage bipartite autour de la valeur de corrélation à évaluer pour déterminer un intervalle (A) et un autre intervalle (B) de valeurs de corrélation de la série de valeurs de corrélation (112), le premier et l'autre intervalle présentant chacun un nombre défini de valeurs de corrélation et la valeur de corrélation à évaluer se trouvant entre le premier intervalle (A) et l'autre intervalle (B) ;
déterminer une valeur de référence (116) à partir de valeurs de corrélation à l'intérieur de l'intervalle (A) et déterminer une autre valeur de référence à partir de valeurs de corrélation à l'intérieur de l'autre intervalle (B) ; et déterminer la valeur seuil (118) en fonction de la valeur de référence et de l'autre valeur de référence.

18. Procédé de détection d'un maximum de corrélation à partir d'une série de valeurs de corrélation, qui présente les étapes suivantes :

trouver une valeur seuil (118) selon la revendication 17 ; et
comparer la valeur de corrélation à évaluer (120 ; 260) avec la valeur seuil (118) trouvée pour la valeur de corrélation à évaluer, et en fonction du résultat de la comparaison mettre en place un signal de déclenchement (114), le signal de déclenchement indiquant si une valeur de corrélation à évaluer est un maximum de corrélation.

19. Programme d'ordinateur avec un code programme pour l'exécution du procédé selon la revendication 17 ou 18, lorsque le programme d'ordinateur tourne sur un ordinateur.

FIG. 1

EP 1 825 602 B1

FIG. 2

FIG. 3

FIG. 4

FIG. 5a

**FIG. 5b**

FIG. 6

EP 1 825 602 B1

BASISBAND-
SIGNAL 770

MISCHER

FILTER

KORRE-
LATION

UP-
SAMPLING

VORRICHTUNG
ZUR
DETEKTION EINES
KORRELATIONS-
MAXIMUMS

TRIGGER-
SIGNAL 114

772

774

776

778

100

## FIG. 7

| Name | | Type | Owner | Date |
|---|---|---|---|---|
| windowlength_total | | Config | wgc | 13.10.03 |
| Description | | | | |
| Anzahl der Samples, die bei der Mittelwertbildung verwendet werden, plus denen, die bei der Mittelwertbildung nicht berücksichtigt werden | | | | |
| Interacts with | | | Subscribers | |
| windowlength_mean | | | | |
| Value | Unit | State/Min | Max | Quant |
| 100 | B_samples_4 | tbc | | |
| Comment | | | | |
| siehe FIG. 2 | | | | |

FIG. 8a

| Name | | Type | Owner | Date |
|---|---|---|---|---|
| windowlength_mean | | Config | wgc | 13.10.03 |
| Description | | | | |
| Anzahl der Samples, die zur Mittelwertbildung verwendet werden | | | | |
| Interacts with | | | Subscribers | |
| windowlength_mean | | | | |
| Value | Unit | State/Min | Max | Quant |
| 85 | B_samples_4 | tbc | | |
| Comment | | | | |
| siehe FIG. 2 | | | | |

FIG. 8b

| Name | | Type | Owner | Date |
|---|---|---|---|---|
| peakmean_thresh | | Config | wgc | 23.10.03 |
| Description | | | | |
| Schwelle, über der das Verhältnis zwischen Korrelation und Mittelwert der Korrelation liegen muss | | | | |
| Interacts with | | | Subscribers | |
| A_nopartcorrs | | | | |
| Value | Unit | State/Min | Max | Quant |
| 9 | 1 | tbc | | |
| Comment | | | | |
| Wert ist abhängig von der Anzahl der Teilkorrelation | | | | |

## FIG. 8c

| Name | | Type | Owner | Date |
|---|---|---|---|---|
| minisamples_bw2peaks | | Config | wgc | 13.10.03 |
| Description | | | | |
| Minimale Differenz zwischen zwei detektierbaren Peaks | | | | |
| Interacts with | | | Subscribers | |
| | | | | |
| Value | Unit | State/Min | Max | Quant |
| 1000 | B_samples_4 | tbc | | |
| Comment | | | | |
| Wert muss größer sein als der maximal vorkommende Delayspread | | | | |

## FIG. 8d

| Name | Type | Owner | Date |
|---|---|---|---|
| peak2mean | Trans | wgc | 25.11.03 |

| Description | |
|---|---|
| Verhältnis des Korrelationswertes zum Korrelationsfloor im Falle eines detektierten Peaks (auf eine Nachkommastelle gerundet) | |

| Interacts with | Subscribers |
|---|---|
| FPGA-Modul und Hardware-Modul des A-Algos, Empfänger-Host, ZRE, Monitoring | hfn, fam, dck, frueh, koe |

| Update rate | Representation |
|---|---|
| ca. t_burstperiod | 1 Byte, davon Bit 1 bis 7 ganzzahliger Wert und LSB entspricht der gerundeten ersten Nachkommastelle |

| Comment |
|---|
| nur für Monitoring in der ZRE |

## FIG. 8e

| Name | Type | Owner | Date |
|---|---|---|---|
| t_noprecorrvals | Const | koe | 9.12.03 |

| Description |
|---|
| Anzahl von Korrelationswerten vor dem erwarteten Korrelationspeak |

| Interacts with | Subscribers |
|---|---|
| T-Algo, Feinkorrelation | blg, std, hfn |

| Value | Unit | State/Min | Max | Quant |
|---|---|---|---|---|
| 30 | B_samples | TBC | | |

| Comment |
|---|
| t_noprecorrvals=t_nocorrvals/2 |

## FIG. 8f

| Name | Type | Owner | Date |
|---|---|---|---|
| t_SNIRcorrfact | Conf | koe | 27.10.03 |
| Description | | | |
| Längen-Korrekturfaktor für das geschätzte SNIR des T-Bursts | | | |
| Interacts with | | Subscribers | |
| T-Algo, Feinkorrelation | | blg, hfn | |
| Value | Unit | State/Min | Max | Quant |
| | - | 1 | 3 | 1/16 |
| Comment | | | | |
| Ist für beide Sendebursts jedes Senders näherungsweise gleich, kann aber für verschiedene Sender unterschiedlich sein | | | | |

## FIG. 8g

| Name | Type | Owner | Date |
|---|---|---|---|
| t_SNIRthresh | Var | koe | 27.10.03 |
| Description | | | |
| Threshold für geschätztes SNIR, ab dem ein detektierter Peak in einem T-Burst als gültig erklärt wird | | | |
| Interacts with | | Subscribers | |
| T-Algo | | blg, hfn | |
| Value | Unit | State/Min | Max | Quant |
| $10^{-1.2}$ | - | 1/128 | 127 | 1/128 |
| Comment | | | | |
| - in linearem Maß, d.h. $10^{-1.2}$ entspricht SNIR=-12dB<br>- kann für jeden Sender unterschiedlich sein (aber für die beiden T-Bursts eines Senders immer gleicher Wert) | | | | |

## FIG. 8h

| Name | Type | Owner | Date |
|------|------|-------|------|
| toa | Trans | hfn | 15.10.03 |

| Description | | | |
|---|---|---|---|
| geschätzte TOA des T-Burst-Starts | | | |

| Interacts with | Subscribers |
|---|---|
| T-Algo, Empfänger-Host, ZRE, Positionsrechnung | fam, dck, bli |

| Update rate | Representation |
|---|---|
| ca. t_burstperiod | 64-bit unsigned Integer (LE) |

| Comment |
|---|
| in ps seit Systemstart; nur für Positionsberechnung |

## FIG. 8i

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5818868 A
- EP 0654913 A
- US 5585429 A
- US 6748007 B1